(19) **Europäisches Patentamt / European Patent Office / Office européen des brevets**

(11) **EP 3 418 053 B1**

(12) # EUROPEAN PATENT SPECIFICATION

(45) Date of publication and mention
of the grant of the patent:
**22.04.2020 Bulletin 2020/17**

(21) Application number: **16890590.9**

(22) Date of filing: **03.03.2016**

(51) Int Cl.:
*B32B 38/06* (2006.01)        *B32B 27/00* (2006.01)
*B32B 3/28* (2006.01)         *B32B 3/30* (2006.01)
*B32B 27/08* (2006.01)        *B32B 27/20* (2006.01)
*B32B 27/22* (2006.01)        *B32B 27/30* (2006.01)
*B32B 27/36* (2006.01)        *C09J 7/29* (2018.01)
*C09J 133/04* (2006.01)

(86) International application number:
**PCT/JP2016/056596**

(87) International publication number:
**WO 2017/141450 (24.08.2017 Gazette 2017/34)**

(54) **DECORATIVE SHEET**

DEKORBLATT

FEUILLE DÉCORATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2016 JP 2016029584**

(43) Date of publication of application:
**26.12.2018 Bulletin 2018/52**

(73) Proprietor: **Riken Technos Corporation
Tokyo 101-8336 (JP)**

(72) Inventor: **INAGAKI Koji
Tokyo 101-8336 (JP)**

(74) Representative: **J A Kemp LLP
14 South Square
Gray's Inn
London WC1R 5JJ (GB)**

(56) References cited:
**JP-A- H08 267 694        JP-A- 2007 245 409
JP-A- 2008 105 198**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a decorative sheet. More specifically, the present invention relates to a decorative sheet used by being bonded to a transparent substrate such as glass or a transparent resin plate.

BACKGROUND ART

In recent years, glass has drawn attention as a member constituting a front panel of a door body for opening/closing a front part of a main body of an article such as a refrigerator, a washing machine, a cupboard, or a costume shelf, or a flat panel of a lid body for opening/closing a flat part of the main body due to a sense of design with transparency of glass. However, glass has a disadvantage that glass has low impact resistance and is easily broken. Therefore, it has been proposed to bond a resin sheet (decorative sheet) provided with a design to a back side of a glass front panel also for imparting a scattering prevention function (for example, see Patent Literatures 1 and 2). However, the designs applied by these techniques are not satisfactory.

JP-2007-245409 discloses a decorative multilayer sheet having from top to bottom a transparent surface layer (30), an adhesive layer (20), upper base material layer (15), a print layer (40) containing a bright pigment, a middle base material layer (16) and a lower base material layer (17), wherein the base material layer has a recessed and protruding design formed by embossing the surface on the side laminated on the adhesive layer. The decorative multilayer sheet is use as door material and applied to a metal sheet (60) with adhesive layer (50) on the side of base material layer (17).

CITATION LIST

PATENT LITERATURE

PATENT LITERATURE 1: JP-A-2014-062709
PATENT LITERATURE 2: JP-A-2010-060190

SUMMARY OF INVENTION

TECHNICAL PROBLEM

An object of the present invention is to provide a decorative sheet having excellent designability. Another object of the present invention is to provide a decorative sheet having excellent designability and used by being bonded to a back side of a transparent substrate such as glass or a transparent resin plate constituting a front panel or the like.

SOLUTION TO PROBLEM

As a result of intensive studies, the present inventors have found that the object can be achieved by a decorative sheet having a specific configuration.

That is, various aspects of the present invention are as follows.

[1]. A decorative sheet comprising: in order from a side to which a transparent substrate is bonded, a transparent pressure-sensitive adhesive layer (A); a transparent resin film layer (B); a printed layer (C); and a resin film layer (D), in which
the entire transparent resin film layer (B) has an embossed shape,
the printed layer (C) comprises a high-brightness pigment,
the entire printed layer (C) has an embossed shape, and
the resin film layer (D) has an embossed shape on a surface thereof on the side facing the printed layer (C).
[2]. The decorative sheet according to [1], comprising: in order from a side to which a transparent substrate is bonded, a transparent pressure-sensitive adhesive layer (A); a transparent resin layer (E); a transparent resin film layer (B); a printed layer (C); and a resin film layer (D), in which
the transparent resin layer (E) has an embossed shape on a surface thereof on the side facing the transparent resin film layer (B).
[3]. The decorative sheet according to [1] or [2], in which

the transparent pressure-sensitive adhesive (A) comprises:

(P) 100 parts by mass of an acrylic polymer having a glass transition temperature of -50 to -25°C;
(Q) 0.01 to 3 parts by mass of a silane coupling agent having an epoxy group;
(R) 0.01 to 0.9 parts by mass of a compound having two or more epoxy groups in one molecule thereof; and
(S) 0.01 to 0.5 parts by mass of an organic polyvalent-metal compound.

[4]. An article comprising the decorative sheet according to any one of [1] to [3].

ADVANTAGEOUS EFFECTS OF INVENTION

The decorative sheet of the present invention has excellent designability. Therefore, the decorative sheet of the present invention is suitable as a decorative sheet used by being bonded to a back side of a transparent substrate such as glass or a transparent resin plate constituting a front panel of a door body for opening/closing a front part of a main body of an article such as a refrigerator, a washing machine, a cupboard, or a costume shelf, or a flat panel of a lid body for opening/closing a flat part of the main body.

Such a conventional technique as disclosed in the Patent Literatures 1 and 2 has, for example, a disadvantage that peeling occurs due to reduction of an adhesive force in an environment of high temperature and high humidity; a disadvantage that when a decorative sheet is knocked from a back side in a process of producing a door body or the like, the pushed part is observed as knocking flaw occurrence also from a front side of the door body or the like to impair designability; and a disadvantage that glass or a transparent resin plate is peeled off from a decorative sheet in a step of filling a foam insulation material in a process of producing a door body of a refrigerator. Meanwhile, the decorative sheet according to an aspect of the present invention has excellent designability and also is good in pressure-sensitive adhesive strength to glass or a transparent resin plate, moisture and heat resistance, heat resistance, transparency, and hardness. A decorative sheet having such characteristics obtains an advantage that the above-described disadvantages concerning peeling in a foam insulation material filling step, peeling in an environment of high temperature and high humidity, and knocking flaw occurrence are eliminated. Therefore, the decorative sheet according to an aspect of the present invention is suitable as a decorative sheet used by being bonded to a back side of a transparent substrate such as glass or a transparent resin plate constituting a front panel of a door body for opening/closing a front part of a main body of an article such as a refrigerator, a washing machine, a cupboard, or a costume shelf, or a flat panel of a lid body for opening/closing a flat part of the main body.

BRIEF DESCRIPTION OF DRAWINGS

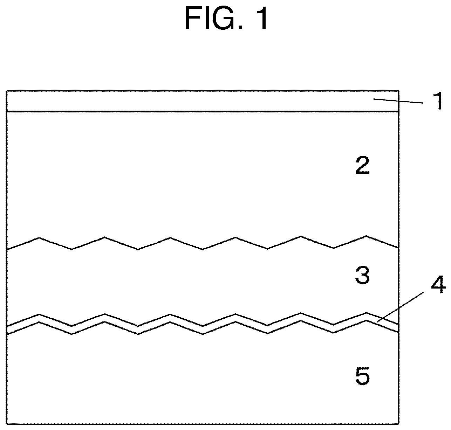

FIG. 1 is a conceptual diagram of a cross section illustrating an example of a decorative sheet of the present invention.

DESCRIPTION OF EMBODIMENTS

Here, the term "film" is used as a term also including a sheet. Similarly, the term "sheet" is used as a term also including a film. The term "resin" is used as a term also including a resin mixture containing two or more resins and a resin composition containing a component other than a resin. In addition, here, sequentially laminating one layer and another layer includes laminating these layers directly and laminating these layers with one or more other layers such as an anchor coat interposed therebetween. The term "front panel" is used in such a manner that the front panel is mutually exchangeable or replaceable with any one of a flat panel, a back panel, a side panel, and a bottom panel. The term "door body" is used in such a manner that the door body is mutually exchangeable or replaceable with a "lid body". The term "front of an article" is not intended to be bound by this definition, but generally means a face of an article to which a user opposes in a case where the article is applied to an application for which the article is normally scheduled, and is not limited to one face.

In addition, the "side to which a transparent substrate is bonded" means a side of a surface on which the decorative sheet is intended to be bonded to the transparent substrate, and it is not intended to limit the subject of the present invention only to a decorative sheet bonded to a transparent substrate. That is, the decorative sheet of the present invention includes both a decorative sheet existing (or distributed) in an independent state and a decorative sheet bonded to a surface of another substance typically such as a transparent substrate.

The decorative sheet of the present invention comprises, in order from a side to which a transparent substrate is bonded, a transparent pressure-sensitive adhesive layer (A), a transparent resin film layer (B), a printed layer (C), and a resin film layer (D).

(A) Transparent pressure-sensitive adhesive layer

The transparent pressure-sensitive adhesive layer (A) is a layer comprising a pressure-sensitive adhesive having excellent transparency from a viewpoint of designability. Preferably, the transparent pressure-sensitive adhesive (A) does not become opaque but is transparent not only during production of the decorative sheet but also during production of an article including the decorative sheet and use thereof.

Here, the "transparent pressure-sensitive adhesive" means a pressure-sensitive adhesive having a visible light transmittance usually of 50% or more, preferably of 70% or more, more preferably of 80% or more, still more preferably of 85% or more, most preferably of 90% or more. Here, the visible light transmittance is obtained by measuring a transmission spectrum of a pressure-sensitive adhesive at wavelengths of 380 to 780 nanometers using a spectrophotometer "SolidSpec-3700" (trade name) available from Shimadzu Corporation and a quartz cell having an optical path length of 10 mm usually at room temperature (typically in a standard environment at a temperature of 25°C and a relative humidity of 50%), and calculating a ratio of the integrated area of the transmission spectrum of the pressure-sensitive adhesive with respect to the integrated area of the transmission spectrum in a case where it is assumed that the transmittance in the whole range of the wavelengths of 380 to 780 nanometers is 100%.

Note that the term "transparent pressure-sensitive adhesive" here is used as a term also including a transparent adhesive. That is, the "transparent pressure-sensitive adhesive" here includes both a chemical substance exhibiting a sufficient bonding property only by pressing an adherend and a chemical substance exhibiting a sufficient bonding property through a curing/solidifying step in addition to pressing the adherend.

The transparent pressure-sensitive adhesive (A) is not limited as long as having a sufficient adhesive force and being transparent, and any pressure-sensitive adhesive can be used. Examples of the transparent pressure-sensitive adhesive (A) include an acrylic pressure-sensitive adhesive, a urethane-based pressure-sensitive adhesive, and a silicone-based pressure-sensitive adhesive. These compounds can be used singly or in a mixture of two or more kinds thereof as the transparent pressure-sensitive adhesive (A).

The transparent pressure-sensitive adhesive (A) may further comprise an optional component(s) other than the pressure-sensitive adhesive component if desired within a range not contradictory to an object of the present invention. Examples of the optional component include an additive such as a photopolymerization initiator, a compound having two or more isocyanate groups in one molecule thereof, an antistatic agent, a surfactant, a leveling agent, a thixotropy-imparting agent, an anti-fouling agent, a printability improver, an antioxidant, a weather resistance stabilizer, a light resistance stabilizer, an ultraviolet absorber, a heat stabilizer, a pigment, or a filler. The blending amount of the optional component is usually about 0.01 to 10 parts by mass relative to 100 parts by mass of the pressure-sensitive adhesive component.

The thickness of the transparent pressure-sensitive adhesive layer (A) is not particularly limited, but may be usually 15 $\mu$m or more and preferably 20 $\mu$m or more from a viewpoint of pressure-sensitive adhesive strength. The thickness may be usually 100 $\mu$m or less and preferably 60 $\mu$m or less from a viewpoint of thickness reduction. The thickness of the transparent pressure-sensitive adhesive layer (A) may be usually 15 $\mu$m or more and 100 $\mu$m or less, and preferably 15 $\mu$m or more and 60 $\mu$m or less, 20 $\mu$m or more and 100 $\mu$m or less, or 20 $\mu$m or more and 60 $\mu$m or less.

A method for forming the transparent pressure-sensitive adhesive layer (A) will be described below.

In a case where the transparent substrate is made from glass or a transparent resin sheet such as an acrylic resin, an aromatic polycarbonate-based resin, or a polyester-based resin,

as the transparent pressure-sensitive adhesive (A),

a pressure-sensitive adhesive comprising:

  (P) 100 parts by mass of an acrylic polymer having a glass transition temperature of -50 to -25°C;
  (Q) 0.01 to 3 parts by mass of a silane coupling agent having an epoxy group;
  (R) 0.01 to 0.5 parts by mass of a compound having two or more epoxy groups in one molecule thereof; and
  (S) 0.01 to 0.5 parts by mass of an organic polyvalent-metal compound

is preferably used.

By using such a pressure-sensitive adhesive, pressure-sensitive adhesive strength with glass, moisture and heat resistance, heat resistance, transparency, and hardness are improved, and therefore the above-described disadvantages concerning peeling in a foam insulation material filling step, peeling in an environment of high temperature and high humidity, and knocking flaw occurrence are eliminated. In addition, by using such a pressure-sensitive adhesive, pressure-sensitive adhesive strength with a transparent resin sheet such as an acrylic resin, an aromatic polycarbonate-based resin, or a polyester-based resin, moisture and heat resistance, heat resistance, transparency, and hardness are improved, and therefore the above-described disadvantages concerning peeling in a foam insulation material filling step, peeling in an environment of high temperature and high humidity, and knocking flaw occurrence are eliminated.

(P) Acrylic polymer having a glass transition temperature of -50 to -25°C

The acrylic polymer of component (P) exhibits pressure-sensitive adhesiveness as a main agent of the pressure-sensitive adhesive and also plays a role of containing therein components (Q) to (S) and another optional component.

The glass transition temperature of the acrylic polymer of component (P) is usually - 50°C or higher and preferably -40°C or higher from a viewpoint of eliminating the above-described disadvantage concerning knocking flaw occurrence. Meanwhile, the glass transition temperature of the acrylic polymer of component (P) is usually -25°C or lower and preferably - 30°C or lower from a viewpoint of improving tackiness (initial adhesiveness). The glass transition temperature of the acrylic polymer of component (P) may be usually -50°C or higher and -25°C or lower, preferably -50°C or higher and -30°C or lower, -40°C or higher and -25°C or lower, or -40°C or higher and -30°C or lower.

Here, the glass transition temperature of the acrylic polymer of component (P) is a calculated value determined by a conventional method, that is, a value determined from the following formula (i.e. formula of Fox):

$$1/(Tg + 273) = W_1/(Tg_1 + 273) + W_2/(Tg_2 + 273) + W_3/(Tg_3 + 273) + ... + W_n/(Tg_n + 273)$$

(In the formula, Tg represents a glass transition temperature (°C) of a polymer formed of n kinds of monomers, each of $W_1$, $W_2$, $W_3$ ..., and $W_n$ represents % by mass of each monomer in a monomer composition, and each of $Tg_1$, $Tg_2$, $Tg_3$ ... and $Tg_n$ represents a glass transition temperatures (°C) of a homopolymer of each monomer.

As the Tg of each homopolymer, for example, a numerical value described in a polymer handbook and the like can be used.

The acrylic polymer of component (P) is not limited as long as having a glass transition temperature of -50 to -25°C, and any acrylic polymer can be used. The molecular weight of the acrylic polymer of component (P) is not particularly limited as long as having a glass transition temperature of -50 to -25°C. Examples of the acrylic polymer include a polymer and a copolymer formed of a single kind or a mixture of two or more kinds of an alkyl (meth)acrylate monomer, a carboxyl group-containing monomer, an epoxy group-containing monomer, a hydroxyl group-containing (meth)acrylate monomer, and the like as a monomer. Note that the term (meth)acrylic acid means acrylic acid or methacrylic acid.

Examples of the alkyl (meth)acrylate monomer include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate, and stearyl (meth)acrylate.

Examples of the carboxyl group-containing monomer include acrylic acid, methacrylic acid, itaconic acid, and β-carboxyethyl (meth)acrylate. This monomer species also includes a compound containing a (meth)acrylic acid backbone in a part of a molecule thereof, such as itaconic acid.

Examples of the epoxy group-containing monomer include glycidyl (meth)acrylate and 4-hydroxybutyl (meth)acrylate glycidyl ether.

Examples of the hydroxyl group-containing (meth)acrylate monomer include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate.

Examples of a commercially available product thereof include "Acrybase LKG-1010" (trade name): glass transition temperature -34°C, "Acrybase LKG-1012" (trade name): glass transition temperature -35°C, "Acrybase LKG-1001" (trade name): glass transition temperature - 40°C; and "Acrybase LKG-1007" (trade name): glass transition temperature -44°C, available from Fujikura Kasei Co., Ltd.

These compounds can be used singly or in a mixture of two or more kinds thereof as the acrylic polymer of component (P). In a case where a mixture is used as component (P), it is only desirable that the glass transition temperature of the mixture fall within the above-described range. In a case where a mixture is used as component (P), it is also preferable that the glass transition temperature of a component having the highest glass transition temperature be -25°C or lower, and that the glass transition temperature of a component having the lowest glass transition temperature be -50°C or higher.

(Q) Silane coupling agent having an epoxy group

The silane coupling agent is a silane compound having at least two kinds of different reactive groups of a hydrolyzable group (for example, an alkoxy group such as a methoxy group or an ethoxy group; an acyloxy group such as an acetoxy group; or a halogen group such as a chloro group) and an organic functional group (for example, an amino group, a vinyl group, an epoxy group, a methacryloxy group, an acryloxy group, or an isocyanate group). As the silane coupling agent of component (Q), a silane coupling agent having at least an epoxy group as an organic functional group is used. By having an epoxy group, the silane coupling agent of component (Q) can be chemically bonded to or strongly interact with component (P) and/or (R). The silane coupling agent of component (Q) may have an organic functional group other than an epoxy group within a range not inhibiting such chemical bonding or interaction. By an action of an epoxy group, appropriate hardness can be imparted to a pressure-sensitive adhesive, and a disadvantage concerning knocking flaw occurrence can be eliminated. In addition, the silane coupling agent of component (Q) has a hydrolyzable group and therefore can eliminate the above-described disadvantage concerning peeling in a foam insulation material filling step in spite of having sufficient hardness to eliminate a disadvantage concerning knocking flaw occurrence. Furthermore, the silane coupling agent of component (Q) has an epoxy group as an organic functional group, and therefore has excellent miscibility with components (R) and (S).

Examples of the silane coupling agent having an epoxy group include 2-(3,4-epoxycyclohexyl) ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane. These compounds can be used singly or in a mixture of two or more kinds thereof as the silane coupling agent of component (Q).

The blending amount of the silane coupling agent of component (Q) is usually 0.01 part by mass or more, and preferably 0.03 parts by mass or more relative to 100 parts by mass of component (P) from a viewpoint of eliminating the above-described disadvantage concerning peeling in a foam insulation material filling step and the above-described disadvantage concerning knocking flaw occurrence. Meanwhile, the blending amount of the silane coupling agent of component (Q) is usually 3 parts by mass or less and preferably 1.5 parts by mass or less from a viewpoint of improving heat cycle resistance and alkali resistance. The blending amount of the silane coupling agent of component (Q) may be usually 0.01 part by mass or more and 3 parts by mass or less, and preferably 0.01 part by mass or more and 1.5 parts by mass or less, 0.03 parts by mass or more and 3 parts by mass or less, or 0.03 parts by mass or more and 1.5 parts by mass or less relative to 100 parts by mass of component (P).

(R) Compound having two or more epoxy groups in one molecule thereof

The epoxy group-containing compound of component (R) has two or more epoxy groups in one molecule thereof and can be chemically bonded to or strongly interact with component (P) and/or (Q). This imparts appropriate hardness to a pressure-sensitive adhesive and can eliminate the above-described disadvantage concerning knocking flaw occurrence. In addition, the epoxy group-containing compound of component (R) exhibits specific high compatibility with component (S), and can retain pressure-sensitive adhesive strength and transparency even in an environment of high temperature and high humidity.

Note that the epoxy group-containing compound of component (R) is clearly distinguished from component (Q) in having no hydrolyzable group. In the present invention, the silane compound having two or more epoxy groups in one molecule thereof and having a hydrolyzable group is component (Q). The epoxy group-containing compound of component (R) is not particularly limited as long as having two or more epoxy groups in one molecule thereof and having no hydrolyzable group.

Examples of the epoxy group-containing compound of component (R) include 1,3-bis(N,N'-diglycidylaminomethyl) cyclohexane, N,N,N,N'-tetraglycidyl-m-xylenediamine, diglycidyl aniline, diglycidyl amine, a bisphenol A-epichlorohydrin type epoxy resin, ethylene glycol diglycidyl ether, polyethylene glycol diglycidyl ether, glycerin diglycidyl ether, glycerin triglycidyl ether, 1,6-hexanediol diglycidyl ether, and trimethylolpropane triglycidyl ether. These compounds can be used singly or in a mixture of two or more kinds thereof as the epoxy group-containing compound of component (R).

The blending amount of the epoxy group-containing compound of component (R) is 0.01 part by mass or more, preferably 0.03 parts by mass or more, and more preferably 0.04 parts by mass or more relative to 100 parts by mass of component (P) from a viewpoint of eliminating the above-described disadvantage concerning peeling in a foam insulation material filling step and the above-described disadvantage concerning knocking flaw occurrence. Meanwhile, the blending amount of the epoxy group-containing compound of component (R) is 0.9 parts by mass or less, preferably 0.6 parts by mass or less, and more preferably 0.5 parts by mass or less from a viewpoint of improving adhesive under heat. The blending amount of the epoxy group-containing compound of component (R) may be preferably 0.3 parts by mass or less and more preferably 0.2 parts by mass or less from a viewpoint of an anchoring property to an adherend. The amount of the epoxy group-containing compound of component (R) may be preferably 0.3 parts by mass or more and more preferably 0.4 parts by mass or more from a viewpoint of preventing cohesive failure of a pressure-sensitive adhesive layer during heat cycle. In some aspects, the blending amount of the epoxy group-containing compound of component (R) may be usually 0.01 part by mass or more and 0.9 parts by mass or less, and may be alternatively 0.01 part by mass or more and 0.6 parts by mass or less, 0.01 part by mass or more and 0.5 parts by mass or less, 0.01 part by mass or more and 0.3 parts by mass or less, 0.01 part by mass or more and 0.2 parts by mass or less, 0.03 parts by mass or more and 0.9 parts by mass or less, 0.03 parts by mass or more and 0.6 parts by mass or less, 0.03 parts by mass or more and 0.5 parts by mass or less, 0.03 parts by mass or more and 0.3 parts by mass or less, 0.03 parts by mass or more and 0.2 parts by mass or less, 0.04 parts by mass or more and 0.9 parts by mass or less, 0.04 parts by mass or more and 0.6 parts by mass or less, 0.04 parts by mass or more and 0.5 parts by mass or less, 0.04 parts by mass or more and 0.3 parts by mass or less, 0.04 parts by mass or more and 0.2 parts by mass or less, 0.3 parts by mass or more and 0.9 parts by mass or less, 0.3 parts by mass or more and 0.6 parts by mass or less, 0.3 parts by mass or more and 0.5 parts by mass or less, 0.4 parts by mass or more and 0.9 parts by mass or less, 0.4 parts by mass or more and 0.6 parts by mass or less, or 0.4 parts by mass or more and 0.5 parts by mass or less relative to 100 parts by mass of component (P).

(S) Organic polyvalent-metal compound

The organic polyvalent-metal compound of component (S) serves to assist a chemical reaction and interaction between component (R) and component (P) or (Q). This imparts appropriate hardness to a pressure-sensitive adhesive and can eliminate the above-described disadvantage concerning knocking flaw occurrence. In addition, the organic polyvalent-metal compound of component (S) exhibits specific high compatibility with component (R), and can retain pressure-sensitive adhesive strength and transparency even in an environment of high temperature and high humidity.

Examples of the organic polyvalent-metal compound of component (S) include a compound in which a polyvalent-metal such as aluminum, zirconium, or titanium is bonded covalently or coordinatedly to an organic compound such as an alkyl ester, an alcohol compound, a carboxylic acid compound, an ether compound, or a ketone compound.

Examples of an organic aluminum compound that can be used as the organic polyvalent-metal compound of component (S) include aluminum trisacetylacetonate, aluminum ethylacetoacetate-diisopropylate, aluminum bisethylacetoacetate-monoacetylacetonate, aluminum trisethylacetoacetate, aluminum ethylate, aluminum isopropylate, aluminum diisopropylate monosecondary butylate, and aluminum secondary butylate.

Examples of an organic zirconium compound that can be used as the organic polyvalent-metal compound of component (S) include n-propyl zirconate, n-butyl zirconate, zirconium tetraacetyl acetonate, zirconium monoacetyl acetonate, and zirconium ethyl acetoacetate.

Examples of an organic titanium compound that can be used as the organic polyvalent-metal compound of component (S) include tetra-i-propoxytitanium, tetra-n-butoxytitanium, tetrakis(2-ethylhexyloxy) titanium, titanium-i-propoxy octylene glycolate, di-i-propoxy-bis(acetylacetonato) titanium, propane dioxytitanium bis(ethyl acetate), propane dioxytitanium bis(ethyl acetoacetate), tri-n-butoxy titanium monostearate, di-i-propoxytitanium distearate, titanium stearate, di-i-propoxytitanium diisostearate, (2-n-butoxycarbonylbenzoyloxy) tributoxytitanium, and di-n-butoxy-bis(triethanolaminato) titanium.

These compounds can be used singly or in a mixture of two or more kinds thereof as the organic polyvalent-metal compound of component (S).

The blending amount of the organic polyvalent-metal compound of component (S) is usually 0.01 part by mass or more and preferably 0.03 parts by mass or more relative to 100 parts by mass of component (P) from a viewpoint of obtaining an effect of component (S). Meanwhile, the blending amount of the organic polyvalent-metal compound of component (S) is usually 0.5 parts by mass or less and preferably 0.3 parts by mass or less from a viewpoint of improving adhesive under heat. The blending amount of the organic polyvalent-metal compound of component (S) may be usually 0.01 part by mass or more and 0.5 parts by mass or less, and preferably 0.01 part by mass or more and 0.3 parts by mass or less, 0.03 parts by mass or more and 0.5 parts by mass or less, or 0.03 parts by mass or more and 0.3 parts by mass or less relative to 100 parts by mass of component (P).

The pressure-sensitive adhesive of the present invention may further comprise an optional component(s) other than components (P) to (S) as desired within a range not contradictory to an object of the present invention. Examples of the optional component include an additive such as a photopolymerization initiator, a compound having two and more isocyanate groups in one molecule thereof, an epoxy resin curing accelerator, an antistatic agent, a surfactant, a leveling agent, a thixotropy-imparting agent, an anti-fouling agent, a printability improver, an antioxidant, a weather resistance stabilizer, a light resistance stabilizer, an ultraviolet absorber, a heat stabilizer, a pigment, or a filler. The blending amount of the optional component is usually about 0.01 to 10 parts by mass relative to 100 parts by mass of component (P).

Preferable examples of the optional component include an epoxy resin curing accelerator. By using the epoxy resin curing accelerator in an amount of usually about 1 to 200 parts by mass, preferably about 10 to 100 parts by mass relative to 100 parts by mass of component (R), reactivity of component (R) can be controlled. Examples of the epoxy resin curing accelerator include an imidazole compound such as 2-methylimidazole, 2-ethylimidazole, 2-ethyl-4-methylimidazole, 2-phenylimidazole, 2-phenyl-4-methylimidazole, 2-phenyl-4-methyl-5-hydroxymethylimidazole, or 2-phenyl-4,5-dihydroxymethylimidazole, and derivatives thereof; 1,8-diazabicyclo [5,4,0]-7-undecene, 1,5-diazabicyclo [4,3,0]-5-nonene, and derivatives thereof (for example, carboxylates, sulfonates, phenolates, and phenol novolak resin salts thereof); a triorganophosphine compound such as triphenylphosphine, tributylphosphine, tris(p-methylphenyl) phosphine, tris(p-methoxyphenyl) phosphine, or tris(p-ethoxyphenyl) phosphine; a quaternary phosphonium salt, triphenylphosphine-triphenyl borate, tetraphenyl phosphine-tetraphenyl borate, and triethylene ammonium-triphenyl borate. These compounds can be used singly or in a mixture of two or more kinds thereof as the epoxy resin curing accelerator.

(B) Transparent resin film layer

The transparent resin film layer (B) is formed of a resin film having excellent transparency from a viewpoint of designability. In addition, the entire transparent resin film layer (B) has an embossed shape from a viewpoint of designability.

The term "emboss" means embossing a pattern or a design. The term "embossed shape" means a shape formed on a surface of a specific film or a layer by embossing or a transferred shape formed on a surface of a film or a layer by deformation in accordance with a shape formed on a surface of another specific film or layer by embossing. Embossing can be performed using a known device such as an after embossing device, a calendar embossing device, or an extrusion embossing device. In the broadest sense, the embossed shape can be said to be a shape having unevenness such as fine grooves on a film surface.

The transparent resin film (B) is not particularly limited, and any transparent resin film can be used. Examples of the transparent resin film (B) include a polyester-based resin such as aromatic polyester or an aliphatic polyester; an acrylic resin; a polycarbonate-based resin; a polyolefin-based resin such as polyethylene, polypropylene, or polymethylpentene; a cellulose-based resin such as cellophane, triacetylcellulose, diacetylcellulose, or acetylcellulose butyrate; a styrene-based resin such as polystyrene, an acrylonitrile-butadiene-styrene copolymer resin (ABS resin), a styrene-ethylene-butadiene-styrene copolymer, a styrene-ethylene-propylene-styrene copolymer, or a styrene-ethylene-ethylene-propylene-styrene copolymer; a polyvinyl chloride-based resin; a polyvinylidene chloride-based resin; a fluorine-containing resin such as polyvinylidene fluoride; polyvinyl alcohol, ethylene vinyl alcohol, polyether ether ketone, nylon, polyamide, polyimide, polyurethane, polyetherimide, polysulfone, and polyethersulfone. These films include an unstretched film, a uniaxially stretched film, and a biaxially stretched film. In addition, the transparent resin film includes a laminated film obtained by laminating two or more layers of one or more kinds thereof.

The transparent resin film (B) is preferably a transparent resin film of a polyvinyl chloride-based resin, an amorphous or low crystalline aromatic polyester-based resin, an acrylic resin, or a polyolefin-based resin from viewpoints of easiness of imparting an embossed shape and retention of the embossed shape.

Examples of the polyvinyl chloride-based resin used as a material of the transparent resin film (B) include polyvinyl chloride (vinyl chloride homopolymer); a vinyl chloride-based copolymer formed of vinyl chloride and another monomer copolymerizable with vinyl chloride, such as a vinyl chloride-vinyl acetate copolymer, a vinyl chloride-(meth)acrylic acid copolymer, a vinyl chloride-methyl (meth)acrylate copolymer, a vinyl chloride-ethyl (meth)acrylate copolymer, a vinyl chloride-maleate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile terpolymer, a vinyl chloride-butadiene copolymer, a vinyl chloride-isoprene copolymer, a vinyl chloride-chlorinated propylene copolymer, a vinyl chloride-vinylidene chloride-vinyl acetate terpolymer, a vinyl chloride-acrylonitrile copolymer, or a copolymer made from vinyl chloride and a certain type of vinyl ether; and a resin obtained by modifying (chlorinating or the like) polyvinyl chloride or a vinyl chloride-based copolymer, such as a post chlorinated vinyl copolymer. Furthermore, a chlorinated polyolefin having a chemical structure similar to polyvinyl chloride, such as chlorinated polyethylene, may be used. These compounds can be used singly or in a mixture of two or more kinds thereof as the polyvinyl chloride-based resin.

The polyvinyl chloride-based resin may further comprise another resin usually used in a polyvinyl chloride-based resin composition. The blending ratio of the other resin is not particularly limited within a range not contradictory to an object of the present invention, but may be usually 0 to 40% by mass, preferably 0 to 30% by mass, and more preferably 5 to 25% by mass relative to 100% by mass of the total of the polyvinyl chloride-based resin and the other resin.

Examples of the other resin include an ethylene-vinyl acetate copolymer; an ethylene-(meth)acrylic acid copolymer and an ethylene-methyl (meth)acrylate copolymer; an ethylene-ethyl (meth)acrylate copolymer; and a core-shell rubber such as a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, or a methacrylate-acrylonitrile/acrylate rubber graft copolymer. These compounds can be used singly or in a mixture of two or more kinds thereof as the other resin.

In addition, the polyvinyl chloride-based resin may further comprise a plasticizer usually used in a polyvinyl chloride-based resin composition. The blending amount of the plasticizer is usually about 0 to 40 parts by mass relative to 100 parts by mass of the total of the polyvinyl chloride-based resin and the other resin.

Examples of the plasticizer include a phthalate-based plasticizer, a trimellitate-based plasticizer, a pyromellitate-based plasticizer, an adipate-based plasticizer, an itaconate-based plasticizer, a citrate-based plasticizer, a cyclohexanedicarboxylate-based plasticizer, and an epoxy-based plasticizer.

Examples of the plasticizer include a polyester-based plasticizer using, as a polyhydric alcohol, ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol, or the like, using, as a polycarboxylic acid, oxalic acid, malonic acid, succinic acid, glutaric acid, adipic acid, trimellitic acid, pimelic acid, suberic acid, maleic acid, azelaic acid, sebacic acid, fumaric acid, phthalic acid, isophthalic acid, terephthalic acid, or the like, and using a monohydric alcohol and/or a monocarboxylic acid as a stopper as necessary.

Examples of the phthalate-based plasticizer include dibutyl phthalate, butylhexyl phthalate, diheptyl phthalate, di(2-ethylhexyl) phthalate, diisononyl phthalate, diisodecyl phthalate, diundecyl phthalate, ditridecyl phthalate, dilauryl phthalate, dicyclohexyl phthalate, and dioctyl terephthalate.

Examples of the trimellitate-based plasticizer include tri(2-ethylhexyl) trimellitate, tri(n-octyl) trimellitate, and tri(isononyl) trimellitate.

Examples of the adipate-based plasticizer include bis(2-ethylhexyl) adipate, dioctyl adipate, diisononyl adipate, and diisodecyl adipate.

Examples of the epoxy-based plasticizer include an epoxidized soybean oil, an epoxidized linseed oil, an epoxidized fatty acid octyl ester, and an epoxidized fatty acid alkyl ester.

Examples of the plasticizer further include a trimellitic acid-based plasticizer, a tetrahydrophthalic acid diester-based plasticizer, a glycerin ester-based plasticizer, an epoxyhexahydrophthalic acid diester-based plasticizer, an isosorbide diester-based plasticizer, a phosphate-based plasticizer, an azelaic acid-based plasticizer, a sebacic acid-based plasticizer, a stearic acid-based plasticizer, a citric acid-based plasticizer, a pyromellitic acid-based plasticizer, a biphenyltetracarboxylate-based plasticizer, and a chlorine-based plasticizer.

These compounds can be used singly or in a mixture of two or more kinds thereof as the plasticizer.

In addition, the polyvinyl chloride-based resin may further comprise a substance(s) usually used in a polyvinyl chloride-based resin composition within a range not contradictory to an object of the present invention. Examples of the optional component which can be contained in the polyvinyl chloride-based resin include a pigment, an inorganic filler, an organic filler, and a resin filler; and an additive such as a lubricant, an antioxidant, a weather resistance stabilizer, a heat stabilizer, a nucleating agent, a release agent, an antistatic agent, a ureaformaldehyde wax, or a surfactant. The blending amount of these optional components is usually about 0.01 to 50 parts by mass relative to 100 parts by mass of the total of the polyvinyl chloride-based resin and the other resin.

Examples of the amorphous or low crystalline aromatic polyester-based resin used as a material of the transparent resin film (B) include a polyester-based copolymer formed of an aromatic polycarboxylic acid component such as terephthalic acid, isophthalic acid, orthophthalic acid, or naphthalene dicarboxylic acid and a polyhydric alcohol component such as ethylene glycol, diethylene glycol, neopentyl glycol, 1,2-butanediol, 1,3-butanediol, 1,4-butanediol, 1,5-pentanediol, 3-methyl-1,5-pentanediol, 2-methyl-1,3-propanediol, or 1,4-cyclohexanedimethanol.

Examples of the amorphous or low crystalline aromatic polyester-based resin include a glycol-modified polyethylene terephthalate (PETG) containing 50 mol% of terephthalic acid, 30 to 40 mol% of ethylene glycol, and 10 to 20 mol% of 1,4-cyclohexanedimethanol; a glycol-modified polycyclohexylenedimethylene terephthalate (PCTG) containing 50 mol% of terephthalic acid, 16 to 21 mol% of ethylene glycol, and 29 to 34 mol% of 1,4-cyclohexanedimethanol; an acid-modified polycyclohexylenedimethylene terephthalate (PCTA) containing 25 to 49.5 mol% of terephthalic acid, 0.5 to 25 mol% of isophthalic acid, and 50 mol% of 1,4-cyclohexanedimethanol; an acid-modified and glycol-modified polyethylene terephthalate containing 30 to 45 mol% of terephthalic acid, 5 to 20 mol% of isophthalic acid, 35 to 48 mol% of ethylene glycol, 2 to 15 mol% of neopentyl glycol, less than 1 mol% of diethylene glycol, and less than 1 mol% of bisphenol A; and an acid-modified and glycol-modified polyethylene terephthalate containing 45 to 50 mol% of terephthalic acid, 5 to 0 mol% of isophthalic acid, 25 to 45 mol% of 1,4-cyclohexanedimethanol, and 25 to 5 mol% of 2,2,4,4,-tetramethyl-1,3-cyclobutanediol, relative to 100 mol% of the total amount of monomers.

These compounds can be used singly or in a mixture of two or more kinds thereof as the amorphous or low crystalline aromatic polyester-based resin.

Here, in a second melting curve (melting curve measured in a last temperature-rising process) measured with a temperature program in which the temperature of a sample is held at 320°C for five minutes, then lowered to -50°C at a temperature falling rate of 20°C/min., held at -50°C for five minutes, and then raised to 320°C at a temperature rising rate of 20°C/min. using a Diamond DSC type differential scanning calorimeter available from Perkin Elmer Japan Co., Ltd, a polyester having a heat of fusion of 10 J/g or less is defined as an amorphous resin, and a polyester having a heat of fusion of more than 10 J/g and 60 J/g or less is defined as a low crystalline resin.

The amorphous or low crystalline aromatic polyester-based resin may further comprise another optional component as desired within a range not contradictory to an object of the present invention. Examples of the optional component which can be contained in the polyester-based resin include a thermoplastic resin other than the polyester-based resin; a pigment, an inorganic filler, an organic filler, and a resin filler; and an additive such as a lubricant, an antioxidant, a weather resistance stabilizer, a heat stabilizer, a release agent, an antistatic agent, or a surfactant. The blending amount of these optional components is usually 25 parts by mass or less and preferably about 0.01 to 10 parts by mass relative to 100 parts by mass of the polyester-based resin.

Preferable examples of the optional component which can be contained in the amorphous or low crystalline aromatic polyester-based resin include a core-shell rubber. By using the core-shell rubber, impact resistance of the decorative sheet can be improved.

Examples of the core-shell rubber include a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, and a methacrylate-acrylonitrile/acrylate rubber graft copolymer. These compounds can be used singly or in a mixture of two or more kinds thereof as the core-shell rubber.

The blending amount of the core-shell rubber may be preferably 0.5 parts by mass or more relative to 100 parts by mass of the amorphous or low crystalline aromatic polyester-based resin in order to improve impact resistance. Meanwhile, the blending amount of the core-shell rubber may be preferably 5 parts by mass or less and more preferably 3 parts by mass or less in order to retain transparency.

Examples of the acrylic resin used as a material of the transparent resin film (B) include a (meth)acrylate (co)polymer, a copolymer of comonomers including a (meth)acrylate, and modified products thereof. Note that the term (meth)acrylic means acrylic or methacrylic. In addition, the (co)polymer means a polymer or a copolymer.

Examples of the (meth)acrylate (co)polymer include polymethyl (meth)acrylate, polyethyl (meth)acrylate, polypropyl (meth)acrylate, polybutyl (meth)acrylate, a methyl (meth)acrylate-butyl (meth)acrylate copolymer, and an ethyl (meth)acrylate-butyl (meth)acrylate copolymer.

Examples of the copolymer of comonomers including a (meth)acrylate include an ethylene-methyl (meth)acrylate copolymer, a styrene-methyl (meth)acrylate copolymer, a vinylcyclohexane-methyl (meth)acrylate copolymer, a maleic anhydride-methyl (meth)acrylate copolymer, and an N-substituted maleimide-methyl (meth)acrylate copolymer.

Examples of the modified product include a polymer into which a lactone ring structure is introduced by an intramolecular cyclization reaction; a polymer into which glutaric anhydride is introduced by an intramolecular cyclization reaction; and a polymer into which an imide structure is introduced by a reaction with an imidating agent (for example, methyl amine, cyclohexyl amine, or ammonia).

These compounds can be used singly or in a mixture of two or more kinds thereof as the acrylic resin.

Preferable examples of an optional component which can be contained in the acrylic resin include a core-shell rubber. By using usually 0 to 50 parts by mass of the core-shell rubber (100 to 50 parts by mass of the acrylic resin), preferably 0 to 40 parts by mass of the core-shell rubber (100 to 60 parts by mass of the acrylic resin), more preferably 0 to 30 parts by mass of the core-shell rubber (100 to 70 parts by mass of the acrylic resin) relative to 100 parts by mass of the total of the acrylic resin and the core-shell rubber, cutting processability and impact resistance of the decorative sheet can be enhanced.

Examples of the core-shell rubber include a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, and a methacrylate-acrylonitrile/acrylate rubber graft copolymer. These compounds can be used singly or in a mixture of two or more kinds thereof as the core-shell rubber.

The acrylic resin may further comprise another optional component as desired within a range not contradictory to an object of the present invention. Examples of the other optional component which can be contained in the acrylic resin include a thermoplastic resin other than the acrylic resin and the core-shell rubber; a pigment, an inorganic filler, an organic filler, and a resin filler; and an additive such as a lubricant, an antioxidant, a weather resistance stabilizer, a heat stabilizer, a release agent, an antistatic agent, a nucleating agent, or a surfactant. The blending amount of these optional components is usually 25 parts by mass or less and preferably about 0.01 to 10 parts by mass relative to 100 parts by mass of the total of the acrylic resin and the core-shell rubber.

Examples of the polyolefin-based resin used as a material of the transparent resin film (B) include a low density polyethylene, a linear low density polyethylene, an ethylene-α-olefin copolymer, an ethylene vinyl acetate copolymer, an ethylene-methyl (meth)acrylate copolymer, an ethylene-ethyl (meth)acrylate copolymer, a propylene homopolymer, a copolymer formed of propylene and a small amount of another α-olefin (including a block copolymer and a random copolymer), polybutene, and polymethylpentene.

Among these resins, a propylene homopolymer and a random copolymer formed of propylene and a small amount of another α-olefin are preferable from viewpoints of transparency and heat resistance.

Examples of the α-olefin include ethylene, 1-butene, 1-hexene, 1-octene, 1-decene, 1-dodecene, and 4-methyl-1-pentene.

These compounds can be used singly or in a mixture of two or more kinds thereof as the polyolefin-based resin.

A method for obtaining the transparent resin film (B) using the above-described materials is not particularly limited. Examples of the method include a method using a device equipped with a calendar rolling machine and a winder and a method using a device equipped with an extruder, a T-die, and a winder.

Examples of the calendar rolling machine include an upright type three roll, an upright type 4 roll, an L type 4 roll, an inverted L type 4 roll, and a Z type roll.

Examples of the extruder include a single screw extruder, a co-rotating twin screw extruder, and a counter-rotating twin-screw extruder.

Examples of the T die include a manifold die, a fish tail die, and a coat hanger die.

The transparent resin film (B) has a total light transmittance (measured according to JIS K7361-1:1997 using a turbidimeter "NDH2000" (trade name) available from Nippon Denshoku Industries Co., Ltd.) preferably of 80% or more, more preferably of 85% or more, still more preferably of 90% or more from a viewpoint of designability. A higher total light transmittance is more preferable.

The transparent resin film (B) has a haze (measured according to JIS K7136:2000 using a turbidimeter "NDH2000" (trade name) available from Nippon Denshoku Industries Co., Ltd.) preferably of 3% or less, more preferably of 2% or less, still more preferably of 1.5% or less from a viewpoint of designability. A lower haze is more preferable.

The transparent resin film (B) has a yellowness index (measured according to JIS K7105:1981 using a chromaticity meter "SolidSpec-3700" (trade name) available from Shimadzu Corporation) preferably of 3 or less, more preferably of 2 or less, still more preferably of 1 or less from a viewpoint of designability. A lower yellowness index is more preferable.

The thickness of the transparent resin film (B) (thickness of the transparent resin film (B) not embossed) is not particularly limited, but may be usually 20 μm or more, preferably 50 μm or more, and more preferably 60 μm or more from a viewpoint of handling property. Meanwhile, the thickness of the transparent resin film (B) may be usually 200 μm or less, preferably 100 μm or less, and more preferably 80 μm or less from a viewpoint of embossability. The thickness of the transparent resin film (B) may be usually 20 μm or more and 200 μm or less, and preferably 20 μm or more and 100 μm or less, 20 μm or more and 80 μm or less, 50 μm or more and 200 μm or less, 50 μm or more and 100 μm or less, 50 μm or more and 80 μm or less, 60 μm or more and 200 μm or less, 60 μm or more and 100 μm or less, or 60 μm or more and 80 μm or less.

The embossed shape of the transparent resin film layer (B) is not particularly limited, and may be any embossed shape. An embossing method is not limited, and any known method may be used. For example, a known embossing method described in JP-A-2006-212909, JP-A-2006-231540, or JP-A-2011-201137 can be used. Typical examples of the embossed shape include continuous or discontinuous grooves formed of straight or curved lines, disposed at equally intervals or unequal intervals. In addition, examples of the cross-sectional shape of the embossed unevenness include a substantially rectangular shape, a substantially triangular shape, a substantially trapezoidal shape, a substantially sinusoidal shape, a substantially Bessel function shape, a substantially elliptic function shape, and a substantially cycloid shape but are not limited thereto. The embossed shape is not limited, but for example, ten point average roughness (Rz) of the film surface may be about 0.5 μm to 100 μm, about 1 μm to 80 μm, or about 3 μm to 50 μm. Specific examples of the structure and shape of an embossing roll will be described below in the section of a method for producing a decorative sheet. Specific examples of the embossed shape of the transparent resin film layer (B) include a shape imitating a natural material, such as a grain pattern or a leather texture; a shape of a hair line pattern as if the shape has been obtained by processing a metal; a shape of a geometric abstract pattern such as a lattice pattern, a stripe pattern, or a polka dot pattern; and a combination thereof.

A method for forming the transparent resin film layer (B) will be described below.

(C) Printed layer

The printed layer (C) is disposed in order to impart high designability to the decorative sheet of the present invention. In addition, the entire printed layer (C) has an embossed shape from a viewpoint of designability.

The printed layer (C) can be formed by printing any pattern with any printing machine using any printing ink, preferably using a printing ink containing a high-brightness pigment from a viewpoint of designability. Printing can be performed directly or via an anchor coat entirely or partially on a back face of the transparent resin film layer (B) or/and on a front face of the resin film layer (D). Here, the "front face" of the film (or layer) means a surface closer to the transparent pressure-sensitive adhesive layer (A), and the "back face" of the film (or layer) means a surface far from the transparent pressure-sensitive adhesive layer (A). The description on the meanings of the "front face" and the "back face" of any one of the transparent resin film (B), the printed layer (C), the resin film layer (D), and the transparent resin layer (E) is incorporated by reference in the whole of the present specification.

Examples of the pattern include a metal-like pattern such as hair lines, a grain pattern, a stone mesh pattern imitating a surface of a rock such as marble, a fabric pattern imitating texture or a cloth-like pattern, a tile stitch pattern, a brickwork pattern, a parquet pattern, and a patchwork.

As the printing ink, for example, an ink obtained by appropriately mixing a binder and a pigment, preferably a binder and a high-brightness pigment with a solvent, a stabilizer, a plasticizer, a catalyst, a curing agent, and the like can be used.

Examples of the binder include a polyurethane-based resin, a vinyl chloride-vinyl acetate-based copolymer resin, a vinyl chloride-vinyl acetate-acrylic copolymer resin, a chlorinated polypropylene-based resin, an acrylic resin, a polyester-based resin, a polyamide-based resin, a butyral-based resin, a polystyrene-based resin, a nitrocellulose-based resin, and a cellulose acetate-based resin. These compounds can be used singly or in a mixture of two or more kinds thereof as the binder.

Examples of the high-brightness pigment include a metal powder such as aluminum, brass, iron, copper, silver, or gold; glass particles coated with silver or a metal oxide such as titanium oxide, indium oxide, zinc oxide, or tin oxide; pulverized products of a vapor-deposited foil of a metal or a metal-containing compound; mica; and a pearl powder. These compounds can be used singly or in a mixture of two or more kinds thereof as the high-brightness pigment.

The average particle size of the high-brightness pigment is not particularly limited, but may be usually 1 to 500 $\mu$m, preferably 10 to 250 $\mu$m, more preferably 20 to 200 $\mu$m, and still more preferably 40 to 120 $\mu$m from a viewpoint of designability.

Note that, here, the average particle size is a particle size at which a cumulative value from the smallest particle size reaches 50% by mass in a particle size distribution curve measured using a laser diffraction/scattering particle size analyzer "MT 3200 II" (trade name) available from Nikkiso Co., Ltd.

The blending amount of the high-brightness pigment is not particularly limited, but may be usually 1 part by mass or more, preferably 5 parts by mass or more, more preferably 15 parts by mass or more, and still more preferably 18 parts by mass or more relative to 100 parts by mass of the binder from a viewpoint of designability (uneven texture of emboss). Meanwhile, the blending amount of the high-brightness pigment may be usually 100 parts by mass or less and preferably 80 parts by mass or less from a viewpoint of production property of the decorative sheet. The blending amount of the high-brightness pigment may be usually 1 part by mass or more and 100 parts by mass or less, and preferably 1 part by mass or more and 80 parts by mass or less, 5 parts by mass or more and 100 parts by mass or less, 5 parts by mass or more and 80 parts by mass or less, 15 parts by mass or more and 100 parts by mass or less, 15 parts by mass or more and 80 parts by mass or less, 18 parts by mass or more and 100 parts by mass or less, or 18 parts by mass or more and 80 parts by mass or less relative to 100 parts by mass of the binder.

The thickness of the printed layer (C) (thickness of the printed layer (C) not embossed) is not particularly limited, but may be usually 0.5 $\mu$m or more, preferably 0.8 $\mu$m or more, and more preferably 1 $\mu$m or more from a viewpoint of handling property . Meanwhile, the thickness of the printed layer (C) may be usually 100 $\mu$m or less, preferably 60 $\mu$m or less, and more preferably 40 $\mu$m or less from a viewpoint of embossability. The thickness of the transparent resin film (B) may be usually 0.5 $\mu$m or more and 100 $\mu$m or less, and preferably 0.5 $\mu$m or more and 60 $\mu$m or less, 0.5 $\mu$m or more and 40 $\mu$m or less, 0.8 $\mu$m or more and 100 $\mu$m or less, 0.8 $\mu$m or more and 60 $\mu$m or less, 0.8 $\mu$m or more and 40 $\mu$m or less, 1 $\mu$m or more and 100 $\mu$m or less, 1 $\mu$m or more and 60 $\mu$m or less, or 1 $\mu$m or more and 40 $\mu$m or less.

The embossed shape of the printed layer (C) is not particularly limited, and may be any embossed shape. The description on the embossed shape and embossing for the transparent resin film layer (B) is generally incorporated by reference into this section. Examples of the embossed shape of the printed layer (C) include a shape imitating a natural material, such as a grain pattern or a leather texture; a shape of a hair line pattern as if the shape has been obtained by processing a metal; a shape of a geometric abstract pattern such as a lattice pattern, a stripe pattern, or a polka dot pattern; and a combination thereof.

A method for forming the printed layer (C) will be described below.

(D) Resin film layer

The resin film layer (D) is a layer serving as a substrate of the decorative sheet of the present invention, and is usually colored to conceal an adherend from a viewpoint of designability. In addition, the resin film layer (D) has an embossed shape on a surface (front face) thereof on the side facing the printed layer (C) from a viewpoint of designability.

The resin film (D) is not limited, and any resin film can be used. Examples of the resin film (D) include resin films of a polyester-based resin such as an aromatic polyester or an aliphatic polyester; an acrylic resin; a polycarbonate-based resin; a poly(meth)acrylimide-based resin; a polyolefin-based resin such as polyethylene, polypropylene, or polymethylpentene; a cellulose-based resin such as cellophane, triacetylcellulose, diacetylcellulose, or acetylcellulose butyrate; a styrene-based resin such as polystyrene, an acrylonitrile-butadiene-styrene copolymer resin (ABS resin), a styrene-ethylene-butadiene-styrene copolymer, a styrene-ethylene-propylene-styrene copolymer, or a styrene-ethylene-ethylene-propylene-styrene copolymer; a polyvinyl chloride-based resin; a polyvinylidene chloride-based resin; a fluorine-containing resin such as polyvinylidene fluoride; polyvinyl alcohol, ethylene vinyl alcohol, polyether ether ketone, nylon, polyamide, polyimide, polyurethane, polyetherimide, polysulfone, and polyethersulfone. These films include an unstretched film, a uniaxially stretched film, and a biaxially stretched film. In addition, the resin film (D) includes a laminated film obtained by laminating two or more layers of one or more kinds thereof.

The resin film (D) is preferably a resin film of a polyvinyl chloride-based resin, an amorphous or low crystalline aromatic polyester-based resin, an acrylic resin, or a polyolefin-based resin from viewpoints of easiness of imparting an embossed shape and retention of the embossed shape. For any one of the resin films, those described above for the transparent resin film (B) can be used.

In addition, in a case where a polyvinyl chloride-based resin is used as the resin film (D), a plasticizer usually used in a polyvinyl chloride-based resin composition may be further contained therein. As the plasticizer, those mentioned as the plasticizer used in a case where a polyvinyl chloride-based resin is used as the transparent resin film (B) can be used similarly. The blending amount of the plasticizer is usually about 0 to 40 parts by mass relative to 100 parts by mass of the polyvinyl chloride-based resin.

A coloring agent for coloring the resin film layer (D) is not limited, and any known coloring agent can be used. For example, in a case of coloring the layer in white, typical examples of the coloring agent include a titanium oxide-based whitening agent. The blending amount of the coloring agent is usually about 0.1 to 40 parts by mass relative to 100 parts by mass of a substrate resin used for the resin film layer (D).

The thickness of the resin film (D) (thickness of the resin film (D) not embossed) is not particularly limited, but may be preferably 50 $\mu$m or more and more preferably 75 $\mu$m or more from a viewpoint of preventing the embossed shape from reaching a back face of the resin film layer (D). Meanwhile, the thickness may be usually 300 $\mu$m or less and preferably 200 $\mu$m or less from a viewpoint of reducing the thickness of an article. The thickness of the resin film (D) may be usually 50 $\mu$m or more and 300 $\mu$m or less, and preferably 50 $\mu$m or more and 200 $\mu$m or less, 75 $\mu$m or more and 300 $\mu$m or less, or 75 $\mu$m or more and 200 $\mu$m or less.

The embossed shape of the resin film layer (D) on a surface (front face) thereof on the side facing the printed layer (C) is not particularly limited and may be any embossed shape. The description on the embossed shape and embossing for the transparent resin film layer (B) is generally incorporated by reference into this section. Examples of the embossed shape include a shape imitating a natural material, such as a grain pattern or a leather texture; a shape of a hair line pattern as if the shape has been obtained by processing a metal; a shape of a geometric abstract pattern such as a lattice pattern, a stripe pattern, or a polka dot pattern; and a combination thereof.

A method for forming the resin film layer (D) will be described below.

In another aspect, the decorative sheet of the present invention comprises, in order from a side to which a transparent substrate is bonded, a transparent pressure-sensitive adhesive layer (A); a transparent resin layer (E); a transparent resin film layer (B); a printed layer (C); and a resin film layer (D).

The transparent pressure-sensitive adhesive layer (A), the transparent resin film layer (B); the printed layer (C); and the resin film layer (D) are as described above.

(E) Transparent resin layer

The decorative sheet of the present invention preferably comprises, in order from a side to which a transparent substrate is bonded, a transparent pressure-sensitive adhesive layer (A); a transparent resin layer (E); a transparent resin film layer (B); a printed layer (C); and a resin film layer (D). The transparent resin layer (E) has an embossed shape on a surface thereof on the side facing the transparent resin film layer (B). Meanwhile, the front face of the transparent resin layer (E) (face on the side facing the transparent pressure-sensitive adhesive layer (A)) is preferably smooth.

The pressure-sensitive adhesive used for bonding to a transparent substrate preferably has a certain degree of "hardness" in order to eliminate the above-described disadvantage concerning knocking flaw occurrence although it is not intended to be bound by theory. Meanwhile, some "hard" pressure-sensitive adhesives do not have very good step followability or filling property. Therefore, if the decorative sheet has unevenness on a surface on the side facing the transparent pressure-sensitive adhesive layer (A), when the decorative sheet is bonded to a transparent substrate, the unevenness may remain without being crushed and may become a gap to degrade designability. That is, the surface of the decorative sheet on the side facing the transparent pressure-sensitive adhesive layer (A), that is, the surface to which a transparent substrate is bonded is preferably smooth. However, if the transparent pressure-sensitive adhesive layer (A) is disposed directly on the transparent resin film layer (B), unevenness easily occurs on a surface of the decorative sheet on the side facing the transparent pressure-sensitive adhesive layer (A). Therefore, in a preferable aspect of the present invention, this disadvantage is eliminated by disposing the transparent resin layer (E) as a buffer material for unevenness.

The transparent resin layer (E) may be directly disposed on the transparent resin film layer (B), or may be disposed via another layer such as an anchor coat.

A method for disposing the transparent resin layer (E) on the transparent resin film layer (B) is not particularly limited. Examples of the method include a method for subjecting a transparent resin to extrusion lamination on the front face of the transparent resin film layer (B).

The transparent resin used for forming the transparent resin layer (E) is not particularly limited. Examples of the transparent resin used for forming the transparent resin layer (E) include those exemplified in the explanation of the transparent resin film (B) as the material thereof. These compounds can be used singly or in a mixture of two or more kinds thereof as the transparent resin used for forming the transparent resin layer (E). The transparent resin used for forming the transparent resin layer (E) and the transparent resin used for forming the transparent resin film layer (B) may be the same as or different from each other. Usually, different resins are used from a viewpoint of preventing deformation of the embossed shape of the transparent resin film layer (B) by heat during extrusion lamination of the transparent resin on a front face of the transparent resin film layer (B).

The transparent resin used for forming the transparent resin layer (E) is preferably a transparent resin having excellent extrusion lamination property. In addition, the transparent resin used for forming the transparent resin layer (E) is more preferably a transparent resin having excellent extrusion lamination property, having good followability to the embossed shape on the transparent resin film layer (B), and making the front face of the transparent resin layer (E) smooth. Examples of such a transparent resin include an amorphous or low crystalline aromatic polyester-based resin. For the amorphous or low crystalline aromatic polyester-based resin, those described above in the explanation of the transparent resin film (B) can be used.

The thickness of the transparent resin layer (E) (i.e. the thickness of the transparent resin layer (E) relative to the protrusion top of the embossed surface of the transparent resin film (B)) may be usually 20 $\mu$m or more, preferably 50 $\mu$m or more, and more preferably 120 $\mu$m or more from viewpoints of followability to the embossed shape and adhesive strength to the transparent resin film layer (B). Meanwhile, the thickness of the transparent resin layer (E) may be usually 250 $\mu$m or less and preferably 200 $\mu$m or less from a viewpoint of thickness reduction. The thickness of the transparent resin layer (E) may be usually 20 $\mu$m or more and 250 $\mu$m or less, and preferably 20 $\mu$m or more and 200 $\mu$m or less, 50 $\mu$m or more and 250 $\mu$m or less, 50 $\mu$m or more and 200 $\mu$m or less, 120 $\mu$m or more and 250 $\mu$m or less, or 120 $\mu$m or more and 200 $\mu$m or less.

In a case where the decorative sheet of the present invention is used for an article (mainly an image display device) incorporating a touch panel, when the decorative sheet is placed on the dirt comparison chart available from National Printing Bureau in an environment of an illuminance of 600 lux, preferably an illuminance of 1,200 lux, and the decorative sheet is irradiated with light of an illuminance of 17,000 lux from the bottom of the chart, the decorative sheet of the present invention preferably has such a light transmittance that a person having corrected visual acuity of 1.0 for the left and right eyes can visually (with both eyes) recognize a figure of 5 mm$^2$ in size, preferably of 4 mm$^2$ in size, more preferably of 3 mm$^2$ in size in the chart at a position 30 cm apart from a surface of the decorative sheet in a vertical direction. In addition, in a case where the decorative sheet of the present invention is applied to the application, when a contamination gray scale defined in JIS L0805:2005 is placed on a black test table (brightness 29, gloss 2.5%) in an environment of an illuminance of 500 lux and the decorative sheet is further placed thereon, the decorative sheet preferably has such a concealing property that a person having corrected visual acuity of 1.0 for the left and right eyes cannot visually (with both eyes) recognize a color difference of color patch No. 4 or 5, preferably a color difference of color patch No. 4 at a position 30 cm apart from a surface of the decorative sheet in a vertical direction. By having such a concealing property, when a touch panel is not operating, the decorative sheet of the present invention can conceal the touch panel to enhance designability of an article. When the touch panel is operating, the touch panel can be operated through the decorative sheet of the present invention.

FIG. 1 is a conceptual diagram of a cross section illustrating a non-limiting example of the decorative sheet of the present invention.

This decorative sheet comprises, in order from a front side, a layer 1 of the transparent pressure-sensitive adhesive (A), a layer 2 of the transparent resin (E), a layer 3 of the transparent resin film (B), a layer 4 of the printed layer (C), and a layer 5 of the resin film (D).

Production method

A method for producing the decorative sheet of the present invention is not particularly limited, and the decorative sheet can be produced by any method.

In a case where the decorative sheet of the present invention comprises, in order from a side to which a transparent substrate is bonded, a transparent pressure-sensitive adhesive layer (A); a transparent resin film layer (B); a printed layer (C); and a resin film layer (D), examples of the method for producing the decorative sheet of the present invention include a method comprising:

(1) a step of forming the printed layer (C) on one surface of the resin film (D) using a printing ink containing the high-brightness pigment;
(2) a step of laminating the transparent resin film (B) on a surface of the laminate obtained in the step (1) on the side facing the printed layer (C);
(3) a step of supplying the laminate obtained in the step (2) between a rotating embossing roll and a receiving roll such that a surface of the laminate on the side facing the transparent resin film layer (B) is the side of the embossing roll, and pressing the laminate using an embossing device equipped with a mechanism for pressing with the embossing roll and the receiving roll; and
(4) a step of forming the transparent pressure-sensitive adhesive layer (A) on a surface of the laminate obtained in the step (3) on the side facing the transparent resin film layer (B).

In the step (1), a method for forming the printed layer (C) on one surface of the resin film (D) to obtain a laminate is not particularly limited as long as using a printing ink containing a high-brightness pigment, and may be any method.

The printed layer (C) may be formed directly on one surface of the resin film (D), or may be formed via an anchor coat. In addition, the printed layer (C) may be formed entirely or partially as desired.

Examples of the printing method include gravure printing and silk printing.

In the step (2), a method for laminating the transparent resin film (B) on a surface of the laminate obtained in the step (1) on the side facing the printed layer (C) to obtain a laminate having the transparent resin film layer (B), the printed layer (C), and the resin film layer (D) in this order is not particularly limited, and may be any method.

Examples of the lamination method include a method for directly and thermally laminating the transparent resin film (B) and the laminate obtained in the step (1); a method for melt-extruding a transparent resin onto a surface of the laminate obtained in the step (1) on the side facing the printed layer (C) to form the transparent resin film layer (B); and a method for laminating the transparent resin film (B) and the laminate obtained in the step (1) via an adhesive.

In the step (3), a method for embossing the laminate obtained in the step (2) from a surface of the laminate on the side facing the transparent resin film layer (B) is not particularly limited as long as the embossed shape is formed also on a surface of the resin film layer (D) of the laminate obtained in the step (2) on the side facing the printed layer (C), and may be any method.

The embossing roll is a roll on which an uneven pattern is engraved on a surface thereof. Examples of the embossing roll include embossing rolls formed of metal, ceramic, and silicone rubber. The embossed shape is not particularly limited, and any shape can be selected from a viewpoint of designability. Examples of the embossed shape include a shape imitating a natural material, such as a grain pattern or a leather texture; a shape of a hair line pattern as if the shape has been obtained by processing a metal; a shape of a geometric abstract pattern such as a lattice pattern, a stripe pattern, or a polka dot pattern; and a combination thereof. The emboss depth of the embossing roll may be usually 7 $\mu$m or more, preferably 10 $\mu$m or more, and more preferably 15 $\mu$m or more from a viewpoint of forming the embossed shape also on a surface of the resin film layer (D) of the laminate obtained in the step (2) on the side facing the printed layer (C).

A method for engraving a surface of the embossing roll is not particularly limited, and any method can be used. Examples of the engraving method include an embossing method using an engraving mill roll and an etching method by acid corrosion; a mechanical engraving method using a diamond stylus; a laser engraving method using a $CO_2$ laser, a YAG laser, or the like; and a sandblasting method. In addition, a surface of the engraved embossing roll can be subjected to chromium plating, iron-phosphor alloy plating, hard carbon treatment by PVD method or CVD method, or the like in order to protect the surface from corrosion and scratching.

The receiving roll usually has a smooth surface. Rubber is generally used as a material constituting the surface of the receiving roll. However, the material is not particularly limited and may be metal, ceramic, or the like.

The embossing conditions may be appropriately selected according to characteristics of the laminate obtained in the step (2) from a viewpoint of forming the embossed shape also on a surface of the resin film layer (D) of the laminate obtained in the step (2) on the side facing the printed layer (C) and a viewpoint of preventing rupture of the laminate, breakage thereof, or attachment thereof to the embossing roll.

Description will be made on a case where the transparent resin film layer (B) of the laminate obtained in the step (2) is a transparent polyvinyl chloride-based resin composition film (thickness 50 to 80 $\mu$m) layer comprising 100 parts by mass of a polyvinyl chloride-based resin (b1) and 12 to 25 parts by mass of a plasticizer (b2), the printed layer (C) is a printed layer (thickness: 1 to 4 $\mu$m) comprising 100 parts by mass of a binder of a vinyl chloride-vinyl acetate copolymer-based resin (c1) and 15 to 90 parts by mass of an aluminum powder-based high-brightness pigment (c2), and the resin film layer (D) is a colored polyvinyl chloride-based resin composition film (thickness: 60 to 150 $\mu$m) layer comprising 100 parts by mass of a polyvinyl chloride-based resin (d1), 3 to 25 parts by mass of a plasticizer (d2), and 1 to 30 parts by mass of a coloring agent (d3).

The laminate obtained in the step (2) may be preheated usually to 150 to 200°C, preferably to 160 to 190°C, more preferably to 165 to 180°C before being embossed. A surface temperature of the embossing roll is usually 10 to 110°C, preferably 15 to 80°C, and more preferably 20 to 70°C. A pressure for the pressing operation is usually 3 to 15 kg/cm and preferably 5 to 12 kg/cm.

In the step (4), a method for forming the transparent pressure-sensitive adhesive layer (A) on a surface of the laminate obtained in the step (3) on the side facing the transparent resin film layer (B) is not particularly limited, and may be any method.

Examples of the method include a method for directly forming the transparent pressure-sensitive adhesive layer (A) on a surface of the laminate obtained in the step (3) on the side facing the transparent resin film layer (B) by a means such as roll coating, gravure coating, reverse coating, die coating, dip coating, spray coating, spin coating, or air knife coating.

Examples of the method include a method for forming a transparent pressure-sensitive adhesive layer on a surface of any film substrate (for example, a biaxially stretched polyethylene terephthalate-based resin film or a biaxially stretched polypropylene-based resin film) by a means such as roll coating, gravure coating, reverse coating, die coating, dip coating, spray coating, spin coating, or air knife coating, and transferring the layer onto a surface of the laminate obtained in the step (3) on the side facing the transparent resin film layer (B).

In a case where the decorative sheet of the present invention comprises, in order from a side to which a transparent substrate is bonded, a transparent pressure-sensitive adhesive layer (A); a transparent resin layer (E); a transparent resin film layer (B); a printed layer (C); and a resin film layer (D), examples of the method for producing the decorative sheet of the present invention include a method comprising:

(1) a step of forming the printed layer (C) on one surface of the resin film (D) using a printing ink containing the high-brightness pigment;
(2) a step of laminating the transparent resin film (B) on a surface of the laminate obtained in the step (1) on the side facing the printed layer (C);
(3) a step of supplying the laminate obtained in the step (2) between a rotating embossing roll and a receiving roll such that a surface of the laminate on the side facing the transparent resin film layer (B) is the side of the embossing roll, and pressing the laminate using an embossing device equipped with a mechanism for pressing with the embossing roll and the receiving roll;
(4') a step of melt-extruding the transparent resin (E) on a surface of the laminate obtained in the step (3) on the side facing the transparent resin film layer (B); and
(5') a step of forming the transparent pressure-sensitive adhesive layer (A) on a surface of the laminate obtained in the step (4') on the side facing the transparent resin layer (E).

The steps (1) to (3) can be performed according to the description on the method for producing the decorative sheet of the present invention comprising, in order from a side to which a transparent substrate is bonded, a transparent pressure-sensitive adhesive layer (A); a transparent resin film layer (B); a printed layer (C); and a resin film layer (D).

In the step (4'), a method for melt-extruding the transparent resin (E) on a surface of the laminate obtained in the step (3) on the side facing the transparent resin film layer (B) to form the transparent resin layer (E) is not particularly limited, and may be any method. Examples of the method include a method for melt-extruding the transparent resin (E) from any T-die such as a manifold die, a fish tail die, or a coat hanger die using any extruder such as a single screw extruder, a co-rotating twin screw extruder, or a counter-rotating twin screw extruder.

In the step (5'), a method for forming the transparent pressure-sensitive adhesive layer (A) on a surface of the laminate obtained in the step (4') on the side facing the transparent resin layer (E) is not particularly limited, and may be any method.

Examples of the method include a method for directly forming the transparent pressure-sensitive adhesive layer (A) on a surface of the laminate obtained in the step (4') on the side facing the transparent resin layer (E) by a means such as roll coating, gravure coating, reverse coating, die coating, dip coating, spray coating, spin coating, or air knife coating.

Examples of the method include a method for forming a transparent pressure-sensitive adhesive layer on a surface of any film substrate (for example, a biaxially stretched polyethylene terephthalate-based resin film or a biaxially stretched polypropylene-based resin film) by a means such as roll coating, gravure coating, reverse coating, die coating, dip coating, spray coating, spin coating, or air knife coating, and transferring the layer onto a surface of the laminate obtained in the step (4') on the side facing the transparent resin layer (E).

EXAMPLES

Hereinafter, the present invention will be described with reference to Examples, but the present invention is not limited thereto.

Methods for measuring and evaluating physical properties

Methods for measuring and evaluating physical properties relating to a decorative sheet will be described.

(i) Initial adhesive strength of decorative sheet

Using a float plate glass (thickness 3 mm) specified in JIS R3202:2011 available from Testpiece, Co., Ltd. as a test plate, a 180 degree peeling adhesive force of a decorative sheet with respect to the test plate was measured in accordance with JIS A5759:2008 at a speed of 300 mm/min. at a temperature of 23°C.

(ii) Adhesive under heat

An adhesive force of a decorative sheet after heat treatment was measured in a similar manner to the test (i) except that a test piece was subjected to heat treatment at a temperature of 60°C for 10 minutes and then the adhesive force was measured.

(iii) Heat cycle resistance

An adhesive force of a decorative sheet after heat cycle was measured in a similar manner to the measurement method (i) except that a test piece was subjected to three cycles in which one cycle was defined as the following two steps of exposing the test piece to an environment of a temperature of -30°C for six hours and then exposing the test piece to an environment of a temperature of 60°C and a relative humidity of 90% for six hours, and then the adhesive force was measured. Subsequently, a ratio (adhesive strength residual ratio) of the adhesive force after the heat cycle with respect to a value of the test (i) was calculated.

(iv) Alkali resistance

An adhesive force of a decorative sheet after immersion treatment was measured in a similar manner to the test (i) except that a test piece was immersed in an aqueous solution of sodium hydroxide having a concentration of 5% by mass and a temperature of 25°C for 24 hours and then the adhesive force was measured. Subsequently, a ratio (adhesive strength residual ratio) of the adhesive force after the immersion treatment with respect to a value of the measurement method (i) was calculated.

(v) Resistance to knocking flaw occurrence

A stainless steel ball having a diameter of 1 mm was pressed with a force of 1 N against a test piece prepared in a similar manner to the test (i) from the side facing the decorative sheet. The decorative sheet was visually observed from the side facing a glass surface and evaluated according to the following criteria.
○ (good): A pressing point of the ball cannot be visually recognized.
✕ (poor): A pressing point of the ball can be visually recognized clearly.

(vi) Resistance to peeling under moisture and heat

An adhesive force of a decorative sheet after moisture and heat treatment was measured in a similar manner to the test (i) except that a test piece was exposed to an environment of a temperature of 60°C and a relative humidity of 98% for 400 hours and then the adhesive force was measured. Subsequently, a ratio (adhesive strength residual ratio) of the adhesive force after the immersion treatment with respect to a value of the measurement method (i) was calculated.

(vii) Resistance to whitening under moisture and heat

In the test (vi), before an adhesive force after the moisture and heat treatment was measured, a pressure-sensitive adhesive layer was visually observed and evaluated according to the following criteria.
○ (good): No change is recognized in transparency of a pressure-sensitive adhesive layer as compared with the pressure-sensitive adhesive layer before exposure.
△ (slightly poor): It is recognized that whitening has occurred as compared with the pressure-sensitive adhesive layer before exposure, but the degree of whitening is not large.
✕ (poor): It is recognized that whitening has occurred to a considerable degree.

(viii) Brightness texture (metallic luster texture)

A decorative sheet was bonded to a float plate glass (thickness 3 mm) specified in JIS R3202:2011 available from Testpiece, Co., Ltd. to prepare a test piece. In a dark place, light of a 40 W white fluorescent lamp (300 lux) was vertically incident on the test piece from a position separated by a distance of 50 cm from a surface opposite to a decorative sheet bonding surface of the test piece. The test piece was visually observed from a position having an angle of 45° with respect to the surface opposite to the decorative sheet bonding surface of the test piece and separated by a distance of 50 cm therefrom. The test piece was evaluated according to the following criteria.
◎ (very good): Very high brightness is observed.

○ (good): Relatively high brightness is observed.

Δ (moderate): High brightness is not observed, but brightness within a usually allowable range is observed.

× (poor): Brightness is hardly observed.

(ix) Embossed texture (uneven texture)

The test piece prepared in the test (viii) was also used for the test piece of a test (ix). In a dark place, the test piece was irradiated with light of a 40 W white fluorescent lamp (300 lux) in parallel such that a surface opposite to a decorative sheet bonding surface of the test piece was separated by a distance of 50 cm from the light of the fluorescent lamp. The test piece was visually observed from a position having an angle of 45° with respect to the surface opposite to the decorative sheet bonding surface of the test piece and separated by a distance of 50 cm therefrom. The test piece was evaluated according to the following criteria.

◎ (very good): Uneven texture of emboss is observed very sharply and clearly.

○ (good): Uneven texture of emboss is observed sharply and clearly.

Δ (moderate): Uneven texture of emboss is observed to be slightly rounded and unclear in a part within a usually allowable range.

× (poor): No uneven texture of emboss is observed, and a test piece looks almost smooth.

Raw materials used

(A) Transparent pressure-sensitive adhesive

(A-1) 100 parts by mass of the following component (P-1), 0.057 parts by mass of the following component (Q-1), 0.077 parts by mass of the following component (R-1), and 0.023 parts by mass of the component (S-1) in terms of solid content were mixed and stirred to obtain a transparent pressure-sensitive adhesive.

(A-2) to (A-21) A transparent pressure-sensitive adhesive was obtained in a similar manner to the pressure-sensitive adhesive (A-1) except that blending of the pressure-sensitive adhesive was changed as shown in Table 1 or 2.

(P) Acrylic polymer having a glass transition temperature of -50 to -25°C

(P-1) "Acrybase LKG-1010" (trade name) available from Fujikura Kasei Co., Ltd.: glass transition temperature -34°C, acid value 1.9 mg KOH/g, weight average molecular weight 850,000

(P-2) "Acrybase LKG-1007" (trade name) available from Fujikura Kasei Co., Ltd.: glass transition temperature -44°C, acid value 2.1 mg KOH/g, weight average molecular weight 1,000,000

(P-3) "Acrybase LKG-1001" (trade name) available from Fujikura Kasei Co., Ltd.: glass transition temperature -40°C, acid value 7 mg KOH/g, weight average molecular weight 1,000,000

(P') Acrylic polymer for reference

(P'-1) "Acrybase LKG-1011" (trade name) available from Fujikura Kasei Co., Ltd.: glass transition temperature -53°C, acid value 1.9 mg KOH/g, weight average molecular weight 1,000,000

(P'-2) "Acrybase LKG-1101" (trade name) available from Fujikura Kasei Co., Ltd.: glass transition temperature -22°C, acid value 0.3 mg KOH/g, weight average molecular weight 430,000

(Q) Silane coupling agent having an epoxy group

(Q-1) 3-glycidoxypropyltrimethoxysilane "KBM-403" (trade name) available from Shin-Etsu Chemical Co., Ltd.

(Q-2) 3-glycidoxypropyltriethoxysilane "KBE-403" (trade name) available from Shin-Etsu Chemical Co., Ltd.

(Q') Silane coupling agent for reference

(Q'-1) 3-methacryloxypropyltrimethoxysilane "Z-6030" (trade name) available from Dow Corning Toray Co.

(R) Compound having two or more epoxy groups in one molecule thereof

(R-1) 1,3-bis(N,N'-diglycidylaminomethyl) cyclohexane

(S) Organic polyvalent-metal compound

(S-1) Aluminum trisacetylacetonate

Table 1

| Blending component (parts by mass) | Blending example of transparent pressure-sensitive adhesive | | | | | | | | | | |
|---|---|---|---|---|---|---|---|---|---|---|---|
| | A-1 | A-2 | A-3 | A-4 | A-5 | A-6 | A-7 | A-8 | A-9 | A-10 | A-11 |
| P-1 | 100 | - | - | - | - | 100 | 100 | 100 | 100 | 100 | 100 |
| P-2 | - | 100 | - | - | - | - | - | - | - | - | - |
| P-3 | - | - | 100 | - | - | - | - | - | - | - | - |
| P'-1 | - | - | - | 100 | - | - | - | - | - | - | - |
| P'-2 | - | - | - | - | 100 | - | - | - | - | - | - |
| Q-1 | 0.057 | 0.057 | 0.057 | 0.057 | 0.057 | - | 0.5 | 1.0 | 5.0 | 0.057 | 0.057 |
| Q-2 | - | - | - | - | - | - | - | - | - | - | - |
| Q'-1 | - | - | - | - | - | - | - | - | - | - | - |
| R-1 | 0.077 | 0.077 | 0.077 | 0.077 | 0.077 | 0.077 | 0.077 | 0.077 | 0.077 | - | 0.30 |
| S-1 | 0.023 | 0.023 | 0.023 | 0.023 | 0.023 | 0.023 | 0.023 | 0.023 | 0.023 | 0.06 | 0.06 |

**Table 2**

| Blending component (parts by mass) | Blending example of transparent pressure-sensitive adhesive | | | | | | | | | |
|---|---|---|---|---|---|---|---|---|---|---|
| | A-12 | A-13 | A-14 | A-15 | A-16 | A-17 | A-18 | A-19 | A-20 | A-21 |
| P-1 | 100 | 100 | 100 | 100 | 100 | 100 | 100 | 100 | 100 | 100 |
| P-2 | - | - | - | - | - | - | - | - | - | - |
| P-3 | - | - | - | - | - | - | - | - | - | - |
| P'-1 | - | - | - | - | - | - | - | - | - | - |
| P'-2 | - | - | - | - | - | - | - | - | - | - |
| Q-1 | 0.057 | 0.057 | 0.057 | 0.057 | 0.057 | 0.057 | 0.057 | 0.057 | - | - |
| Q-2 | - | - | - | - | - | - | - | - | 0.057 | - |
| Q'-1 | - | - | - | - | - | - | - | - | - | 0.057 |
| R-1 | 0.46 | 0.60 | 1.0 | 0.090 | 0.090 | 0.090 | 0.040 | 0.090 | 0.077 | 0.077 |
| S-1 | 0.023 | 0.023 | 0.060 | - | 0.30 | 1.0 | 0.060 | 0.010 | 0.023 | 0.023 |

(B) Transparent resin film

(B-1) A transparent polyvinyl chloride-based resin composition film having a thickness of 65 μm was formed from a composition comprising 100 parts by mass of the following component (b1-1) and 12 parts by mass of the following component (b2-1).

(b1-1) A vinyl chloride homopolymer having a degree of polymerization of 800
(b2-1) A polyester-based plasticizer

(C) Printing ink

(C-1) A high-brightness ink comprising 100 parts by mass of a binder of a vinyl chloride-vinyl acetate copolymer-based resin and 20 parts by mass of an aluminum powder-based high-brightness pigment was used.
(C-2) A high-brightness ink comprising 100 parts by mass of a binder of a vinyl chloride-vinyl acetate copolymer-based resin and 15 parts by mass of an aluminum powder-based high-brightness pigment was used.

(D) Resin film

(D-1) A colored polyvinyl chloride-based resin composition film having a thickness of 80 μm was formed from a composition comprising 100 parts by mass of the following component (d1-1), 8 parts by mass of the following component (d2-1), and 2.6 parts by mass of the following component (d3-1).

(d1-1) A vinyl chloride homopolymer having a degree of polymerization of 800
(d2-1) A phthalate-based plasticizer
(d3-1) A titanium oxide-based white coloring agent

(E) Transparent resin

(E-1) Amorphous aromatic polyester-based resin "KODAR PETG GS1" (trade name): glass transition temperature 81 °C, heat of fusion 0 J/g (having no clear melting peak in DSC second melting curve) available from Eastman Chemical Company

Example 1

(1) A printed layer was disposed on one side of the film (D-1) using the ink (C-1) so as to have a layer thickness of 2 μm after drying.

(2) Subsequently, the film (B-1) was superposed on the printed layer of the ink (C-1), and the resulting product was pressed using a device having a mechanism for pressing with a mirror-finished roll and a smooth receiving roll at a temperature of 25°C to obtain a laminate in which the layer of the film (B-1), the printed layer of the ink (C-1), and the layer of the film (D-1) were laminated in this order.

(3) Subsequently, using an embossing device equipped with a mechanism for pressing with an embossing roll having an emboss depth of 20 μm and a receiving roll having a smooth surface, the laminate obtained in the step (2) was supplied between the rotating embossing roll and the receiving roll such that a surface of the laminate on the side facing the layer of the film (B-1) faced the embossing roll, and pressed. At this time, the preheating temperature before the laminate obtained in the step (2) was embossed was 170°C, the temperature of the embossing roll was 70°C, and a pressing pressure was 11 kg/cm.

(4) Subsequently, the layer of the pressure-sensitive adhesive (A-1) was disposed on a surface of the laminate obtained in the step (3) on the side facing the layer of the film (B-1) so as to have a layer thickness of 50 μm after drying to obtain a decorative sheet.

The obtained decorative sheet was subjected to the tests (i) to (ix) for measuring and evaluating physical properties thereof. The results are shown in Table 3. When the cross section of the decorative sheet was observed, the entire layer of the film (B-1) and the entire layer of the ink (C-1) each had an embossed shape, and a surface of the layer of the film (D-1) on the side facing the layer of the ink (C-1) had an embossed shape. Furthermore, the decorative sheet ha a light transmittance capable of confirming a figure of 3 mm$^2$ in size, and had a concealing property not capable of recognizing a color difference of color patch No. 4. Therefore, it is considered that the decorative sheet according to the invention can conceal a touch panel to enhance designability of an article when the touch panel is not operating and that the touch panel can be operated through the decorative sheet according to the invention when the touch panel is operating.

Example 2

(1) A printed layer was disposed on one side of the film (D-1) using the ink (C-1) so as to have a layer thickness of 2 μm after drying.

(2) Subsequently, the film (B-1) was superposed on the printed layer of the ink (C-1), and the resulting product was pressed using a device having a mechanism for pressing with a mirror-finished roll and a smooth receiving roll at a temperature of 25°C to obtain a laminate in which the layer of the film (B-1), the printed layer formed of the ink (C-1), and the layer of the film (D-1) were laminated in this order.

(3) Subsequently, using an embossing device equipped with a mechanism for pressing with an embossing roll having an emboss depth of 20 μm and a receiving roll having a smooth surface, the laminate obtained in the step (2) was supplied between the rotating embossing roll and the receiving roll such that a surface of the laminate on the side facing the layer of the film (B-1) faced the embossing roll, and pressed. At this time, the preheating temperature before the laminate obtained in the step (2) was embossed was 170°C, the temperature of the embossing roll was 70°C, and a pressing pressure was 11 kg/cm.

(4') Subsequently, the resin (E-1) was melt-extruded onto a surface of the laminate obtained in the step (3) on the side facing the layer of the film (B-1) at a T-die exit resin temperature of 220°C to form a layer of the resin (E-1) having a thickness of 150 μm.

(5') Subsequently, the layer of the pressure-sensitive adhesive (A-1) was disposed on a surface of the laminate obtained in the step (4') on the side facing the layer of the resin (E-1) so as to have a layer thickness of 20 μm after drying to obtain a decorative sheet.

The obtained decorative sheet was subjected to the tests (i) to (ix) for measuring and evaluating physical properties thereof. The results are shown in Table 3. When the cross section of the decorative sheet was observed, the entire layer of the film (B-1) and the entire layer of the ink (C-1) each had an embossed shape, and a surface of the layer of the film (D-1) on the side facing the layer of the ink (C-1) had an embossed shape. The layer of the resin (E-1) had an embossed shape on a surface on the side facing the layer of the film (B-1), but had a smooth surface on the side facing the layer of the pressure-sensitive adhesive (A-1). Furthermore, the decorative sheet ha a light transmittance capable of confirming a figure of 3 mm$^2$ in size, and had a concealing property not capable of recognizing a color difference of color patch No. 4. Therefore, it is considered that the decorative sheet according to the invention can conceal a touch panel to enhance designability of an article when the touch panel is not operating and that the touch panel can be operated through the decorative sheet according to the invention when the touch panel is operating.

Example 3

Production of a decorative sheet and measurement and evaluation of physical properties thereof were performed in a similar manner to Example 1 except that the temperature of the embossing roll was 90°C and the pressure for the pressing operation was 2 kg/cm in the step (3). The results are shown in Table 3. In addition, when the cross section of the decorative sheet was observed, only a surface of the layer of the film (B-1) on the side facing the layer of the pressure-sensitive adhesive (A-1) had an embossed shape.

Example 4

Production of a decorative sheet and measurement and evaluation of physical properties thereof were performed in a similar manner to Example 1 except that the ink (C-2) was used in place of the ink (C-1). The results are shown in Table 3. When the cross section of the decorative sheet was observed, the entire layer of the film (B-1) and the entire layer of the ink (C-1) each had an embossed shape, and a surface of the layer of the film (D-1) on the side facing the layer of the ink (C-1) had an embossed shape.

Examples 5 to 24

Production of a decorative sheet and measurement and evaluation of physical properties thereof were performed in a similar manner to Example 1 except that a pressure-sensitive adhesive shown in one of Tables 3 to 5 was used and a layer of the resin (E-1) having a thickness of 150 μm was formed as in Example 2. The results are shown in one of Tables 3 to 5. In addition, in any of these examples, when the cross section of the decorative sheet was observed, the entire layer of the film (B-1) and the entire layer of the ink (C-1) each had an embossed shape, and a surface of the layer of the film (D-1) on the side facing the layer of the ink (C-1) had an embossed shape.

Table 3

| | | Ex.1 | Ex.2 | Ex.3 | Ex.4 | Ex.5 | Ex.6 | Ex.7 | Ex.8 |
|---|---|---|---|---|---|---|---|---|---|
| Sheet configuration and production conditions | (A) Transparent pressure-sensitive adhesive | A-1 | A-1 | A-1 | A-1 | A-2 | A-3 | A-4 | A-5 |
| | (E) Transparent resin | — | E-1 | — | — | E-1 | E-1 | E-1 | E-1 |
| | (B) Transparent resin film | B-1 | B-1 | B-1 | B-1 | B-1 | B-1 | B-1 | B-1 |
| | (C) Printing ink | C-1 | C-1 | C-1 | C-2 | C-1 | C-1 | C-1 | C-1 |
| | (D) Resin film | D-1 | D-1 | D-1 | D-1 | D-1 | D-1 | D-1 | D-1 |
| | Embossing temperature ℃ | 70 | 70 | 90 | 70 | 70 | 70 | 70 | 70 |
| | Embossing pressure Kg/cm | 11 | 11 | 2 | 11 | 11 | 11 | 11 | 11 |
| Evaluation result | Adhesive strength N/25mm | 27.3 | 27.5 | 28.1 | 26.8 | 21.1 | 21.8 | 22.4 | 5.2 |
| | Adhesive under heat N/25mm | 17.3 | 17.0 | 17.9 | 16.5 | 12.6 | 13.1 | 9.0 | 3.1 |
| | Heat cycle resistance % | 152 | 144 | 151 | 160 | 147 | 139 | 132 | 52 |
| | Alkali resistance % | 144 | 149 | 143 | 151 | 140 | 141 | 138 | 140 |
| | Resistance to knocking flaw occurrence | ○ | ○ | ○ | ○ | ○ | ○ | × | ○ |
| | Resistance to peeling under moisture and heat % | 114 | 119 | 106 | 121 | 105 | 102 | 101 | 88 |
| | Resistance to whitening under moisture and heat | ○ | ○ | ○ | ○ | ○ | ○ | ○ | ○ |
| | Brightness texture | ◎ | ◎ | ◎ | △ | ◎ | ◎ | ◎ | ◎ |
| | Embossed texture | ◎ | ◎ | × | △ | ◎ | ◎ | ◎ | ◎ |

Table 4

| | | Ex.9 | Ex.10 | Ex.11 | Ex.12 | Ex.13 | Ex.14 | Ex.15 | Ex.16 |
|---|---|---|---|---|---|---|---|---|---|
| Sheet configuration and production conditions | (A) Transparent pressure-sensitive adhesive | A-6 | A-7 | A-8 | A-9 | A-10 | A-11 | A-12 | A-13 |
| | (E) Transparent resin | E-1 | E-1 | E-1 | E-1 | E-1 | E-1 | E-1 | E-1 |
| | (B) Transparent resin film | B-1 | B-1 | B-1 | B-1 | B-1 | B-1 | B-1 | B-1 |
| | (C) Printing ink | C-1 | C-1 | C-1 | C-1 | C-1 | C-1 | C-1 | C-1 |
| | (D) Resin film | D-1 | D-1 | D-1 | D-1 | D-1 | D-1 | D-1 | D-1 |
| | Embossing temperature °C | 70 | 70 | 70 | 70 | 70 | 70 | 70 | 70 |
| | Embossing pressure Kg/cm | 11 | 11 | 11 | 11 | 11 | 11 | 11 | 11 |
| Evaluation result | Adhesive strength N/25mm | 22.2 | 18.1 | 29.6 | 12.9 | 12.6 | 15.2 | 39.9 | 43.2 |
| | Adhesive under heat N/25mm | 8.5 | 11.8 | 12.4 | 8.2 | 4.7 | 9.9 | 20.1 | 21.5 |
| | Heat cycle resistance % | 55 | 161 | 85 | 43 | 76 | 144 | 113 | 108 |
| | Alkali resistance % | 64 | 107 | 91 | 12 | 92 | 139 | 99 | 90 |
| | Resistance to knocking flaw occurrence | ○ | ○ | ○ | ○ | ○ | ○ | ○ | ○ |
| | Resistance to peeling under moisture and heat % | 57 | 119 | 110 | 107 | 90 | 111 | 64 | 59 |
| | Resistance to whitening under moisture and heat | ○ | ○ | ○ | ○ | ○ | ○ | ○ | ○ |
| | Brightness texture | ◎ | ◎ | ◎ | ◎ | ◎ | ◎ | ◎ | ◎ |
| | Embossed texture | ◎ | ◎ | ◎ | ◎ | ◎ | ◎ | ◎ | ◎ |

### Table 5

| | | Ex.17 | Ex.18 | Ex.19 | Ex.20 | Ex.21 | Ex.22 | Ex.23 | Ex.24 |
|---|---|---|---|---|---|---|---|---|---|
| Sheet configuration and production conditions | (A) Transparent pressure-sensitive adhesive | A-14 | A-15 | A-16 | A-17 | A-18 | A-19 | A-20 | A-21 |
| | (E) Transparent resin | E-1 | E-1 | E-1 | E-1 | E-1 | E-1 | E-1 | E-1 |
| | (B) Transparent resin film | B-1 | B-1 | B-1 | B-1 | B-1 | B-1 | B-1 | B-1 |
| | (C) Printing ink | C-1 | C-1 | C-1 | C-1 | C-1 | C-1 | C-1 | C-1 |
| | (D) Resin film | D-1 | D-1 | D-1 | D-1 | D-1 | D-1 | D-1 | D-1 |
| | Embossing temperature °C | 70 | 70 | 70 | 70 | 70 | 70 | 70 | 70 |
| | Embossing pressure Kg/cm | 11 | 11 | 11 | 11 | 11 | 11 | 11 | 11 |
| Evaluation result | Adhesive strength N/25mm | 7.8 | 15.6 | 15.4 | 16.2 | 26.2 | 26.4 | 24.2 | 18.2 |
| | Adhesive under heat N/25mm | 2.6 | 4.5 | 10.0 | 6.5 | 20.8 | 18.3 | 11.2 | 4.7 |
| | Heat cycle resistance % | 314 | 84 | 95 | 56 | 161 | 139 | 179 | 97 |
| | Alkali resistance % | 221 | 123 | 119 | 84 | 162 | 134 | 163 | 79 |
| | Resistance to knocking flaw occurrence | ○ | ○ | ○ | ○ | ○ | ○ | ○ | ○ |
| | Resistance to peeling under moisture and heat % | 113 | 103 | 105 | 91 | 116 | 110 | 119 | 107 |
| | Resistance to whitening under moisture and heat | ○ | ○ | ○ | ○ | ○ | ○ | ○ | ○ |
| | Brightness texture | ◎ | ◎ | ◎ | ◎ | ◎ | ◎ | ◎ | ◎ |
| | Embossed texture | ◎ | ◎ | ◎ | ◎ | ◎ | ◎ | ◎ | ◎ |

From these experimental results, it has been found that the decorative sheet of the present invention has excellent brightness texture and embossed texture. The preferable decorative sheet of the present invention is excellent in brightness texture and embossed texture, and is good in pressure-sensitive adhesive strength with glass, moisture and heat resistance, heat resistance, transparency, and hardness. Therefore, it has been found that the above-described disadvantages concerning peeling in a foam insulation material filling step, peeling in an environment of high temperature and high humidity, and knocking flaw occurrence can be eliminated. Even in a case where a transparent resin plate is used as a transparent substrate, it is reasonably assumed that similar advantages can be obtained. Therefore, the preferable decorative sheet of the present invention is suitable as a decorative sheet used by being bonded to a back side of a transparent substrate such as glass or a transparent resin plate constituting a front panel of a door body for opening/closing a front part of a main body of an article such as a refrigerator, a washing machine, a cupboard, or a costume shelf, or a flat panel of a lid body for opening/closing a flat part of the main body.

REFERENCE SIGNS LIST

1    (A) Transparent pressure-sensitive adhesive layer
2    (E) Transparent resin layer
3    (B) Transparent resin film layer
4    (C) Printed layer
5    (D) Resin film layer

**Claims**

1. A decorative sheet comprising: in order from a side to which a transparent substrate is bonded, a transparent pressure-sensitive adhesive layer (A); a transparent resin film layer (B); a printed layer (C); and a resin film layer (D), wherein
the entire transparent resin film layer (B) has an embossed shape,
the printed layer (C) contains a high-brightness pigment,
the entire printed layer (C) has an embossed shape, and
the resin film layer (D) has an embossed shape on a surface thereof on the side facing the printed layer (C).

2. The decorative sheet according to claim 1, wherein
the transparent pressure-sensitive adhesive (A) comprises:

   (P) 100 parts by mass of an acrylic polymer having a glass transition temperature of -50 to -25°C;
   (Q) 0.01 to 3 parts by mass of a silane coupling agent having an epoxy group;
   (R) 0.01 to 0.9 parts by mass of a compound having two or more epoxy groups in one molecule thereof; and
   (S) 0.01 to 0.5 parts by mass of an organic polyvalent-metal compound.

3. The decorative sheet according to claim 2, wherein the transparent pressure-sensitive adhesive (A) further comprises an epoxy resin curing accelerator in an amount of 1 to 200 parts by mass relative to 100 parts by mass of the compound having two or more epoxy groups in one molecule thereof (R).

4. The decorative sheet according to any one of claims 1-3, wherein the transparent resin film (B) is a transparent resin film of a polyvinyl chloride-based resin, an amorphous or low crystalline aromatic polyester-based resin, an acrylic resin, or a polyolefin-based resin.

5. The decorative sheet according to any one of claims 1-4, comprising: in order from a side to which a transparent substrate is bonded, a transparent pressure-sensitive adhesive layer (A); a transparent resin layer (E); a transparent resin film layer (B); a printed layer (C); and a resin film layer (D), wherein,
the transparent resin layer (E) has an embossed shape on a surface thereof on the side facing the transparent resin film layer (B).

6. The decorative sheet according to claim 5, wherein a face of the transparent resin layer (E) on the side facing the transparent pressure-sensitive adhesive layer (A) is smooth.

7. The decorative sheet according to claim 5 or 6, wherein the transparent resin layer (E) is one formed from an amorphous or low crystalline aromatic polyester-based resin.

8. The decorative sheet according to any one of claims 5-7, wherein the transparent resin layer (E) has a thickness of 20-250 μm.

9. An article comprising the decorative sheet according to any one of claims 1-8.

10. A method for producing the decorative sheet according to any one of claims 1-4, comprising:

(1) a step of forming the printed layer (C) on one surface of the resin film (D) using a printing ink containing the high-brightness pigment;
(2) a step of laminating the transparent resin film (B) on a surface of the laminate obtained in the step (1) on the side facing the printed layer (C);
(3) a step of supplying the laminate obtained in the step (2) between a rotating embossing roll and a receiving roll such that a surface of the laminate on the side facing the transparent resin film layer (B) is the side of the embossing roll, and pressing the laminate using an embossing device equipped with a mechanism for pressing with the embossing roll and the receiving roll; and
(4) a step of forming the transparent pressure-sensitive adhesive layer (A) on a surface of the laminate obtained in the step (3) on the side facing the transparent resin film layer (B).

11. A method for producing the decorative sheet according to any one of claims 5-8, comprising:

(1) a step of forming the printed layer (C) on one surface of the resin film (D) using a printing ink containing the high-brightness pigment;
(2) a step of laminating the transparent resin film (B) on a surface of the laminate obtained in the step (1) on the side facing the printed layer (C);
(3) a step of supplying the laminate obtained in the step (2) between a rotating embossing roll and a receiving roll such that a surface of the laminate on the side facing the transparent resin film layer (B) is the side of the embossing roll, and pressing the laminate using an embossing device equipped with a mechanism for pressing with the embossing roll and the receiving roll;
(4') a step of melt-extruding the transparent resin (E) on a surface of the laminate obtained in the step (3) on the side facing the transparent resin film layer (B); and
(5') a step of forming the transparent pressure-sensitive adhesive layer (A) on a surface of the laminate obtained in the step (4') on the side facing the transparent resin layer (E).

**Patentansprüche**

1. Dekorfolie, umfassend: in der Reihenfolge von einer Seite, an die ein transparentes Substrat gebunden ist, eine transparente druckempfindliche Klebeschicht (A); eine transparente Harzfilmschicht (B); eine bedruckte Schicht (C); und eine Harzfilmschicht (D), wobei
die gesamte transparente Harzfilmschicht (B) eine geprägte Form aufweist,
die bedruckte Schicht (C) ein Pigment mit hoher Helligkeit enthält,
die gesamte bedruckte Schicht (C) eine geprägte Form aufweist, und
die Harzfilmschicht (D) auf einer Oberfläche davon auf der Seite gegenüber der bedruckten Schicht (C) eine geprägte Form aufweist.

2. Dekorfolie nach Anspruch 1, wobei
der transparente druckempfindliche Kleber (A) Folgendes umfasst:

(P) 100 Massenteile eines Acrylpolymers, das eine Glasübergangstemperatur von -50 bis -25 °C aufweist;
(Q) 0,01 bis 3 Massenteile eines Silankupplungsmittels, das eine Epoxygruppe aufweist;
(R) 0,01 bis 0,9 Massenteile einer Verbindung, die zwei oder mehr Epoxygruppen in einem Molekül davon aufweist; und
(S) 0,01 bis 0,5 Massenteile einer organischen mehrwertigen Metallverbindung.

3. Dekorfolie nach Anspruch 2, wobei der transparente druckempfindliche Kleber (A) ferner einen Epoxidharz-Aushärtungsbeschleuniger in einer Menge von 1 bis 200 Massenteilen gegenüber 100 Massenteilen der Verbindung, die zwei oder mehr Epoxygruppen in einem Molekül davon aufweist (R), umfasst.

4. Dekorfolie nach einem der Ansprüche 1-3, wobei der transparente Harzfilm (B) ein transparenter Harzfilm eines Harzes auf Basis von Polyvinylchlorid, eines amorphen oder niedrig-kristallinen Harzes auf Basis von aromatischem Polyester, eines Acrylharzes oder eines Harzes auf Basis von Polyolefin ist.

**5.** Dekorfolie nach einem der Ansprüche 1-4, umfassend: in der Reihenfolge von einer Seite, an die ein transparentes Substrat gebunden ist, eine transparente druckempfindliche Klebeschicht (A); eine transparente Harzschicht (E); eine transparente Harzfilmschicht (B); eine bedruckte Schicht (C); und eine Harzfilmschicht (D), wobei die transparente Harzschicht (E) auf einer Oberfläche davon auf der Seite gegenüber der transparenten Harzfilmschicht (B) eine geprägte Form aufweist.

**6.** Dekorfolie nach Anspruch 5, wobei eine Seite der transparenten Harzschicht (E) auf der Seite gegenüber der transparenten druckempfindlichen Klebeschicht (A) glatt ist.

**7.** Dekorfolie nach Anspruch 5 oder 6, wobei die transparente Harzschicht (E) eine ist, die aus einem amorphen oder niedrig-kristallinen Harz auf Basis von aromatischem Polyester gebildet ist.

**8.** Dekorfolie nach einem der Ansprüche 5-7, wobei die transparente Harzschicht (E) eine Dicke von 20-250 $\mu$m aufweist.

**9.** Artikel, umfassend die Dekorfolie nach einem der Ansprüche 1-8.

**10.** Verfahren zum Herstellen der Dekorfolie nach einem der Ansprüche 1-4, umfassend:

(1) einen Schritt des Bildens der bedruckten Schicht (C) auf einer Oberfläche des Harzfilms (D) unter Verwendung einer Druckfarbe, die das Pigment mit hoher Helligkeit enthält;
(2) einen Schritt des Laminierens des transparenten Harzfilms (B) auf einer Oberfläche des Laminats, das in dem Schritt (1) erlangt wurde, auf der Seite gegenüber der bedruckten Schicht (C);
(3) einen Schritt des Zuführens des in dem Schritt (2) erlangten Laminats zwischen eine sich drehenden Prägewalze und eine Aufnahmewalze, sodass eine Oberfläche des Laminats auf der Seite gegenüber der transparenten Harzfilmschicht (B) die Seite der Prägewalze ist, und Pressen des Laminats unter Verwendung einer Prägevorrichtung, die mit einem Mechanismus zum Pressen mit der Prägewalze und der Aufnahmewalze ausgestattet ist; und
(4) einen Schritt des Bildens der transparenten druckempfindlichen Klebefläche (A) auf einer Oberfläche des Laminats, das in dem Schritt (3) erlangt wurde, auf der Seite gegenüber der transparenten Harzfilmschicht (B).

**11.** Verfahren zum Herstellen der Dekorfolie nach einem der Ansprüche 5-8, umfassend:

(1) einen Schritt des Bildens der bedruckten Schicht (C) auf einer Oberfläche des Harzfilms (D) unter Verwendung einer Druckfarbe, die das Pigment mit hoher Helligkeit enthält;
(2) einen Schritt des Laminierens des transparenten Harzfilms (B) auf einer Oberfläche des Laminats, das in dem Schritt (1) erlangt wurde, auf der Seite gegenüber der bedruckten Schicht (C);
(3) einen Schritt des Zuführens des in dem Schritt (2) erlangten Laminats zwischen eine sich drehenden Prägewalze und eine Aufnahmewalze, sodass eine Oberfläche des Laminats auf der Seite gegenüber der transparenten Harzfilmschicht (B) die Seite der Prägewalze ist, und Pressen des Laminats unter Verwendung einer Prägevorrichtung, die mit einem Mechanismus zum Pressen mit der Prägewalze und der Aufnahmewalze ausgestattet ist; und
(4') einen Schritt des Schmelzextrudierens des transparenten Harzes (E) auf einer Oberfläche des Laminats, das in dem Schritt (3) erlangt wurde, auf der Seite gegenüber der transparenten Harzfilmschicht (B); und
(5') einen Schritt des Bildens der transparenten druckempfindlichen Klebeschicht (A) auf einer Oberfläche des Laminats, das in dem Schritt (4') erlangt wurde, auf der Seite gegenüber der transparenten Harzschicht (E).

## Revendications

**1.** Feuille décorative, comprenant : dans l'ordre depuis une face à laquelle un substrat transparent est lié, une couche adhésive transparente sensible à la pression (A) ; une couche de pellicule de résine transparente (B) ; une couche imprimée (C) ; et une couche de pellicule de résine (D), dans lequel
la couche de pellicule de résine transparente entière (B) a une forme gaufrée, la couche imprimée (C) contient un pigment à haute luminosité,
la couche imprimée entière (C) a une forme gaufrée, et
la couche de pellicule de résine (D) a une forme gaufrée sur une surface de celle-ci sur la face faisant face à la couche imprimée (C).

**2.** Feuille décorative selon la revendication 1, dans lequel
la couche adhésive transparente sensible à la pression (A) comprend :

(P) 100 parties en masse d'un polymère acrylique ayant une température de transition vitreuse de -50 à -25°C ;
(Q) 0,01 à 3 parties en masse d'un agent de couplage silane ayant un groupe époxy ;
(R) 0,01 à 0,9 parties en masse d'un composé ayant deux ou plus groupes époxy dans une molécule de celui-ci ; et
(S) 0,01 à 0,5 parties en masse d'un composé métallique polyvalent organique.

**3.** Feuille décorative selon la revendication 2, dans lequel la couche adhésive transparente sensible à la pression (A) comprend en outre un accélérateur de durcissement de résine époxy en une quantité de 1 à 200 parties en masse relativement à 100 parties en masse du composé ayant deux ou plus groupes époxy dans une molécule de celui-ci (R).

**4.** Feuille décorative selon une quelconque des revendications 1 à 3, dans lequel la pellicule de résine transparente (B) est une pellicule de résine transparente d'une résine à base de chlorure de polyvinyle, d'une résine à base de polyester aromatique amorphe ou à faible cristallinité, d'une résine acrylique, ou d'une résine à base de polyoléfine.

**5.** Feuille décorative selon une quelconque des revendications 1 à 4, comprenant : dans l'ordre depuis une face à laquelle un substrat transparent est lié, une couche adhésive transparente sensible à la pression (A) ; une couche de résine transparente (E) ; une couche de pellicule de résine transparente (B) ; une couche imprimée (C) ; et une couche de pellicule de résine (D), dans lequel,
la couche de résine transparente (E) a une forme gaufrée sur une surface de celle-ci sur la face faisant face à la couche de pellicule de résine transparente (B).

**6.** Feuille décorative selon la revendication 5, dans lequel une face de la couche de résine transparente (E) sur la face faisant face à la couche adhésive transparente sensible à la pression (A) est lisse.

**7.** Feuille décorative selon la revendication 5 ou 6, dans lequel la couche de résine transparente (E) est une formée à partir d'une résine à base de polyester aromatique amorphe ou à faible cristallinité.

**8.** Feuille décorative selon une quelconque des revendications 5 à 7, dans lequel la couche de résine transparente (E) a une épaisseur de 20 à 250 $\mu$m.

**9.** Article, comprenant la feuille décorative selon une quelconque des revendications 1 à 8.

**10.** Procédé pour produire la feuille décorative selon une quelconque des revendications 1 à 4, comprenant :

(1) une étape de formation de la couche imprimée (C) sur une surface de la pellicule de résine (D) en utilisant une encre d'impression contenant le pigment à haute luminosité ;
(2) une étape de stratification de la pellicule de résine transparent (B) sur une surface du stratifié obtenu dans l'étape (1) sur la face faisant face à la couche imprimée (C) ;
(3) une étape de fourniture du stratifié obtenu dans l'étape (2) entre un rouleau de gaufrage rotatif et un rouleau de réception de telle sorte qu'une surface du stratifié sur la face faisant face à la couche de pellicule de résine transparente (B) soit la face du rouleau de gaufrage, et de compression du stratifié en utilisant un dispositif de gaufrage équipé d'un mécanisme pour comprimer avec le rouleau de gaufrage et le rouleau de réception ; et
(4) une étape de formation de la couche adhésive transparente sensible à la pression (A) sur une surface du stratifié obtenu dans l'étape (3) sur la face faisant face à la couche de pellicule de résine transparente (B).

**11.** Procédé pour produire la feuille décorative selon une quelconque des revendications 5 à 8, comprenant :

(1) une étape de formation de la couche imprimée (C) sur une surface de la pellicule de résine (D) en utilisant une encre d'impression contenant le pigment à haute luminosité ;
(2) une étape de stratification de la pellicule de résine transparente (B) sur une surface du stratifié obtenu dans l'étape (1) sur la face faisant face à la couche imprimée (C) ;
(3) une étape de fourniture du stratifié obtenu dans l'étape (2) entre un rouleau de gaufrage rotatif et un rouleau de réception de telle sorte qu'une surface du stratifié sur la face faisant face à la couche de pellicule de résine transparente (B) soit la face du rouleau de gaufrage, et de compression du stratifié en utilisant un dispositif de gaufrage équipé d'un mécanisme pour comprimer avec le rouleau de gaufrage et le rouleau de réception ;

(4') une étape d'extrusion en fusion de la résine transparente (E) sur une surface du stratifié obtenu dans l'étape (3) sur la face faisant face à la couche de pellicule de résine transparente (B) ; et

(5') une étape de la formation de la couche adhésive transparente sensible à la pression (A) sur une surface du stratifié obtenu dans l'étape (4') sur la face faisant face à la couche de résine transparente (E).

# FIG. 1

**EP 3 418 053 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007245409 A
- JP 2014062709 A
- JP 2010060190 A
- JP 2006212909 A
- JP 2006231540 A
- JP 2011201137 A